(19) 【Europäisches Patentamt / European Patent Office / Office européen des brevets】

(11) **EP 4 668 687 A1**

(12) **EUROPEAN PATENT APPLICATION**
published in accordance with Art. 153(4) EPC

(43) Date of publication:
**24.12.2025 Bulletin 2025/52**

(21) Application number: **24757200.1**

(22) Date of filing: **14.02.2024**

(51) International Patent Classification (IPC):
**H04L 27/26** (2006.01)  **H04L 5/00** (2006.01)
**H04W 72/232** (2023.01)

(52) Cooperative Patent Classification (CPC):
**H04L 5/00; H04L 27/26; H04W 72/232**

(86) International application number:
**PCT/KR2024/002071**

(87) International publication number:
**WO 2024/172477 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.02.2023 KR 20230019515**

(71) Applicant: **LG Electronics Inc.**
**Yeongdeungpo-gu**
**Seoul 07336 (KR)**

(72) Inventors:
• **BAN, Choongsang**
**Seoul 06772 (KR)**
• **SHIN, Seokmin**
**Seoul 06772 (KR)**
• **YANG, Suckchel**
**Seoul 06772 (KR)**
• **BAE, Duckhyun**
**Seoul 06772 (KR)**

(74) Representative: **Plasseraud IP**
**104 Rue de Richelieu**
**CS92104**
**75080 Paris Cedex 02 (FR)**

(54) **METHOD AND APPARATUS FOR TRANSMITTING AND RECEIVING UPLINK IN WIRELESS COMMUNICATION SYSTEM**

(57) A method according to an embodiment of the present disclosure incudes receiving configuration information related to PUSCH, receiving DCI for scheduling the PUSCH, and transmitting the PUSCH. Based on a DCI format related to the DCI and/or the configuration information, whether a transform precoding for the PUSCH is enabled is determined based on the DCI or a higher layer parameter.

【FIG. 2】

```
          ┌──────────┐
          │  START   │
          └────┬─────┘
               │
  ┌────────────────────────────────┐
  │ RECEIVE CONFIGURATION INFORMATION │──── S210
  │       RELATED TO PUSCH          │
  └────────────┬───────────────────┘
               │
  ┌────────────────────────────────┐
  │          RECEIVE DCI            │──── S220
  └────────────┬───────────────────┘
               │
  ┌────────────────────────────────┐
  │         TRANSMIT PUSCH          │──── S230
  └────────────┬───────────────────┘
               │
          ┌──────────┐
          │   END    │
          └──────────┘
```

EP 4 668 687 A1

## Description

[TECHNICAL FIELD]

The present disclosure relates to a method and an apparatus for transmitting and receiving an uplink in a wireless communication system.

[BACKGROUND ART]

Mobile communication systems have been developed to provide a voice service while ensuring the activity of a user. However, in the mobile communication system, not only a voice, but also a data service is extended. At present, there is a shortage of resources due to an explosive increase in traffic, and users demand a higher speed service. As a result, a more advanced mobile communication system is required.

Requirements for a next-generation mobile communication system should be able to support the acceptance of explosive data traffic, a dramatic increase in the per-user data rate, the acceptance of a significant increase in the number of connected devices, very low end-to-end latency, and high-energy efficiency. To this end, various technologies are researched, which include dual connectivity, massive multiple input multiple output (MIMO), in-band full duplex, non-orthogonal multiple access (NOMA), super wideband support, device networking, and the like.

On the other hand, according to an existing operation, a UL waveform is configured semi-statically. The UL waveform may vary based on whether transform precoding is applied/whether the transform precoding is enabled. Hereinafter, this will be specifically described.

1) When the transform precoding is applied (that is, when the transform precoding is enabled), the waveform is based on Discrete Fourier Transform-spreading-Orthogonal Frequency Division Multiplexing (DFT-s-OFDM).

2) When the transform precoding is not applied (that is, when the transform precoding is disabled), the waveform is based on Cyclic Prefix-Orthogonal Frequency Division Multiplexing (CP-OFDM).

Whether the transform precoding is enabled is configured/indicated semi-statically.

For example, whether the transform precoding is enabled may be determined based on an RRC parameter. i) When a transformPrecoder parameter is configured based on PUSCH-config, whether the transform precoding is enabled may be determined based on the transformPrecoder parameter. ii) When the transformPrecoder parameter is not configured, whether the transform precoding is enabled may be determined based on an msg3-transformPrecoder parameter.

According to Rel-18 coverage enhancement, a dynamic waveform switching operation related to the above-described UL waveform is supported. As dynamic waveform switching operation is supported, ambiguity in terminal operation may occur. For example, operations i) and ii) below may be assumed.

i) An UL waveform related indication (an enable/disable related indication of the transform precoding) may be performed based on each of RRC signaling and dynamic signaling (e.g., DCI). Specifically, the transform precoding is configured to be enabled (or disabled) through the RRC signaling, but the transform precoding may be configured to be disabled (or enabled) through the dynamic signaling. That is, for conflicting configurations/indications, it may be ambiguous which configuration/indication the terminal is to prioritize.

ii) The UL waveform related indication (the enable/disable related indication of the transform precoding) may be performed based on the RRC signaling. As the dynamic waveform switching is supported, the terminal expects to receive a dynamic indication for determination of the UL waveform from the base station. However, when there is no dynamic indication as in ii), it may be ambiguous how the terminal is to operate. As a specific example, it may be ambiguous whether the terminal should operate based on an indication via the corresponding RRC signaling or based on a waveform indication (an indication of whether the transform precoding is enabled) via previous scheduling DCI.

## [DETAILED DESCRIPTION OF INVENTION]

## [TECHNICAL PROBLEMS]

As described above, ambiguity in terminal operation may occur due to the newly supported dynamic waveform switching operation.

An object of the present disclosure is to provide a method for solving the above-described problems.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

**[TECHNICAL SOLUTION]**

A method performed by a user equipment in a wireless communication system according to an embodiment of the present disclosure comprises receiving configuration information related to a Physical Uplink Shared Channel (PUSCH), receiving Downlink Control Information (DCI) for scheduling of the PUSCH, and transmitting the PUSCH.

Based on a DCI format related to the DCI and/or the configuration information, whether a transform precoding for the PUSCH is enabled is determined based on the DCI or a higher layer parameter.

Based on the DCI format being a DCI format 0_1 or a DCI format 0_2 and a parameter related to a dynamic indication of the transform precoding being configured based on the configuration information: the DCI includes a transform precoder indicator field, and the transform precoding is enabled or disabled based on the transform precoder indicator field.

Based on the DCI format being the DCI format 0_1 or the DCI format 0_2, and the parameter related to the dynamic indication not being configured based on the configuration information: the transform precoding may be enabled or disabled based on the higher layer parameter.

The higher layer parameter may be a transformPrecoder parameter within the configuration information or a random access parameter.

Based on the transformPrecoder parameter not being configured: the transform precoding may be enabled or disabled based on the random access parameter.

The random access parameter may be an msg3-transformPrecoder parameter.

Based on the DCI format being a DCI format 0_0, the transform precoding may be enabled or disabled based on the higher layer parameter.

Based on a txConfig parameter representing a transmission scheme related to the PUSCH not being configured, the DCI format may be the DCI format 0_0.

The PUSCH may be transmitted based on a single antenna port.

Based on the txConfig parameter representing a transmission scheme related to the PUSCH being configured, the DCI format may be the DCI format 0_1 or the DCI format 0_2.

The transmission scheme may be codebook based transmission or non-codebook based transmission.

The PUSCH may be transmitted based on same antenna ports as one or more SRS ports indicated based on the DCI format.

The one or more SRS ports may be based on one or more SRS resources indicated based on an SRS resource indicator field of the DCI format.

A waveform related to the transmission of the PUSCH may be based on i) Cyclic Prefix-Orthogonal Frequency Division Multiplexing (CP-OFDM) or ii) Discrete Fourier Transform-Spreading-OFDM (DFT-S-OFDM).

The transform precoding may be related to the DFT-S-OFDM.

Physical Uplink Control Information (UCI) may be multiplexed in the PUSCH in which the transform precoding is enabled based on the transform precoder indicator field. A Physical Uplink Control Channel (PUCCH) format related to the UCI may be PUCCH format 3 or PUCCH format 4. The transform precoding may be applied to the PUCCH format 3 or the PUCCH format 4.

The method may further comprise transmitting a Physical Uplink Control Channel (PUCCH). The PUSCH and the PUCCH may be transmitted simultaneously.

A waveform related to the PUSCH may be the same as a waveform related to the PUCCH.

The waveform related to the PUSCH may be different from the waveform related to the PUCCH.

A user equipment (UE) operating in a wireless communication according to another embodiment of the present disclosure comprises one or more transceivers, one or more processors, and one or more memories connected to the one or more processors and configured to store instructions.

The instructions, based on being executed by the one or more processors, configure the one or more processors to perform all steps of any one of the methods.

A device according to another embodiment of the present disclosure comprises one or more memories and one or more processors operably connected to the one or more memories.

The one or more memories are configured to store instructions based on being executed by the one or more processors, and the instructions are configured to allow the one or more processors to perform all steps of any one of the methods.

One or more non-transitory computer readable mediums according to another embodiment of the present disclosure stores instructions.

The instructions executable by one or more processors are configured to allow the one or more processors to perform all steps of any one of the methods.

A method performed by a base station in a wireless communication system according to another embodiment of the present disclosure comprises transmitting configuration information related to a Physical Uplink Shared Channel (PUSCH), transmitting Downlink Control Information (DCI) for scheduling of the PUSCH, and receiving the PUSCH.

Based on a DCI format related to the DCI and/or the configuration information: whether a transform precoding for the PUSCH is enabled is determined based on the DCI or a higher layer parameter.

Based on the DCI format being a DCI format 0_1 or a DCI format 0_2 and a parameter related to a dynamic indication of the transform precoding being configured based on the configuration information: the DCI includes a transform precoder indicator field, and the transform precoding is enabled or disabled based on the transform precoder indicator field.

A base station operating in a wireless communication according to another embodiment of the present disclosure comprises one or more transceivers, one or more processors, and one or more memories connected to the one or more processors and configured to store instructions.

The instructions, based on being executed by the one or more processors, are configured to allow the one or more processors to perform all steps of any one of the methods.

**[ADVANTAGEOUS EFFECTS]**

According to an embodiment of the present disclosure, based on a DCI format and/or configuration information related to DCI: whether transform precoding for a PUSCH is enabled is determined based on the DCI or a higher layer parameter. Therefore, a case where whether transform precoding is applied dynamically is indicated through the DCI is clearly defined/configured. An ambiguity in terminal operation related to whether the transform precoding is applied during PUSCH transmission scheduled by the DCI may be resolved.

In addition, since a case where whether the transform precoding is applied is dynamically indicated is clearly defined, it may be expected that the dynamic waveform switching operation is accurately performed by the terminal that receives the dynamic indication. Accordingly, an effectiveness of the dynamic waveform switching operation introduced for utilization of a waveform more suitable for a channel environment may be ensured.

Effects that could be achieved with the present disclosure are not limited to those that have been described hereinabove merely by way of example, and other effects and advantages of the present disclosure will be more clearly understood from the following description by a person skilled in the art to which the present disclosure pertains.

**[BRIEF DESCRIPTION OF THE DRAWING]**

FIG. 1 illustrates an example of an uplink transmission/reception operation.

FIG. 2 is a flowchart illustrating a method performed by a user equipment according to an embodiment of the present disclosure.

FIG. 3 is a flowchart illustrating a method performed by a base station according to another embodiment of the present disclosure.

FIG. 4 illustrates configurations of a first device and a second device according to an embodiment of the present disclosure.

**[DETAILED DESCRIPTION]**

Reference will now be made in detail to embodiments of the present disclosure, examples of which are illustrated in the accompanying drawings. A detailed description to be disclosed below together with the accompanying drawing is to describe exemplary embodiments of the present disclosure and not to describe a unique embodiment for carrying out the present disclosure. The detailed description below includes details to provide a complete understanding of the present disclosure. However, those skilled in the art know that the present disclosure may be carried out without the details.

In some cases, in order to prevent a concept of the present disclosure from being ambiguous, known structures and devices may be omitted or illustrated in a block diagram format based on core functions of each structure and device.

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

Uplink Channel Structure

The UE transmits a related signal to the base station through an uplink channel to be described below and the base station receives the related signal from the UE through the uplink channel to be described below.

(1) Physical Uplink Shared Channel (PUSCH)

The PUSCH transports uplink data (e.g., UL-shared channel transport block (UL-SCH TB) and/or uplink control information (UCI) and is transmitted based on a Cyclic Prefix - Orthogonal Frequency Division Multiplexing (CP-OFDM) waveform or a Discrete Fourier Transform - spread - Orthogonal Frequency Division Multiplexing (DFT-s-OFDM) waveform. When the PUSCH is transmitted based on the DFT-s-OFDM waveform, the UE transmits the PUSCH by applying transform precoding. As an example, when the transform precoding is disable (e.g., transform precoding is disabled), the UE transmits the PUSCH based on the CP-OFDM waveform, and when the transform precoding is enabled (e.g., transform precoding is enabled), the UE may transmit the PUSCH based on the CP-OFDM waveform or the DFT-s-OFDM waveform. PUSCH transmission is dynamically scheduled by the UL grant in the DCI or semi-statically scheduled based on higher layer (e.g., RRC) signaling (and/or Layer 1 (L1) signaling (e.g., PDCCH)) (configured grant). The PUSCH transmission may be performed based on a codebook or a non-codebook.

(2) Physical Uplink Control Channel (PUCCH)

The PUCCH transports uplink control information, HARQ-ACK, and/or scheduling request (SR), and is divided into Short PUCCH and Long PUCCH according to a PUCCH transmission length. Table 1 shows PUCCH formats.

[Table 1]

| PUCCH format | Length in OFDM symbols $N_{\text{symb}}^{\text{PUCCH}}$ | Number of bits | Usage | Etc |
|---|---|---|---|---|
| 0 | 1 - 2 | $\leq 2$ | HARQ, SR | Sequence selection |
| 1 | 4 - 14 | $\leq 2$ | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 transports UCI with a maximum size of 2 bits and is mapped and transmitted based on a sequence. Specifically, the UE transmits specific UCI to the base station by transmitting one of a plurality of sequences through the PUCCH which is PUCCH format 0. The UE transmits the PUCCH which is PUCCH format 0 within a PUCCH resource for configuring a corresponding SR only when transmitting a positive SR.

PUCCH format 1 transports the UCI having the maximum size of 2 bits and the modulation signal is spread by an orthogonal cover code (OCC) (configured differently depending on whether frequency hopping is made) in the time domain. The DMRS is transmitted in a symbol in which the modulation symbol is not transmitted (that is, time division multiplexed (TDMed) and transmitted).

PUCCH format 2 transports UCI having a bit size larger than 2 bits and the modulation symbol is frequency division multiplexed (FDMed) with the DMRS and transmitted. The DM-RS is located in symbol indexes #1, #4, #7, and #10 within a resource block given with a density of 1/3. A pseudo noise (PN) sequence is used for a DM_RS sequence. The frequency hopping may be activated for 2 symbol PUCCH format 2.

PUCCH format 3 is not subjected to UE-multiplexing within the same physical resource blocks, and transports UCI with a bit size larger than 2 bits. In other words the PUCCH resource of PUCCH format 3 does not include the orthogonal cover code. The modulation symbol time division multiplexed (TDMed) with the DMRS and transmitted.

PUCCH format 4 supports multiplexing of up to 4 UEs in the same physical resource blocks, and transports the UCI with the bit size larger than 2 bits. In other words the PUCCH resource of PUCCH format 3 includes the orthogonal cover code. The modulation symbol is time division multiplexed (TDMed) with the DMRS and transmitted.

Uplink Transmission/Reception Operation

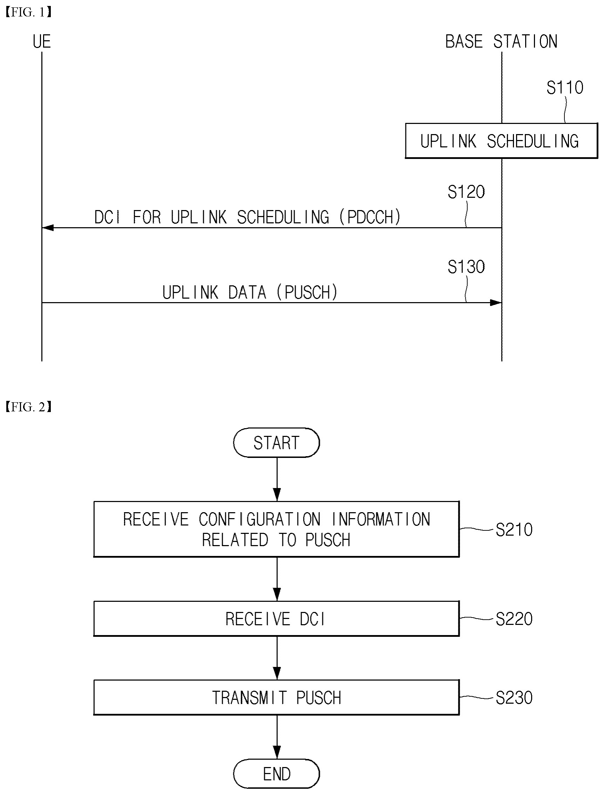

FIG. 1 illustrates an example of an uplink transmission and reception operation. Referring to the FIG. 1, the eNB may schedule uplink transmission such as the frequency/time resource, the transport layer, an uplink precoder, the MCS, etc., (S110). In particular, the eNB may determine a beam for PUSCH transmission of the UE through the beam management operations described above. And, the UE may receive, from the eNB, DCI for uplink scheduling (i.e., including scheduling information of the PUSCH) on the PDCCH (S120).

DCI format 0_0 or 0_1 may be used for the uplink scheduling and in particular, DCI format 0_1 may include information such as the following examples: Identifier for DCI formats, UL/Supplementary uplink (SUL) indicator, Bandwidth part indicator, Frequency domain resource assignment, Time domain resource assignment, Frequency hopping flag, Modulation and coding scheme (MCS), SRS resource indicator (SRI), Precoding information and number of layers, Antenna port(s), SRS request, DMRS sequence initialization, and Uplink Shared Channel (UL-SCH) indicator.

In particular, configured SRS resources in an SRS resource set associated with higher layer parameter "usage" may be indicated by an SRS resource indicator field. Further, "spatialRelationInfo" may be configured for each SRS resource and a value of "spatialRelationInfo" may be one of {CRI, SSB, and SRI}.

In addition, the UE may transmit the uplink data to the eNB on the PUSCH (S130). When the UE detects a PDCCH including DCI format 0_0 or 0_1, the UE may transmit the corresponding PUSCH according to the indication by the corresponding DCI. two schemes(Codebook based transmission scheme and non-codebook based transmission scheme) are supported for PUSCH transmission.

In the case of the codebook based transmission, when higher layer parameter txConfig" is set to "codebook", the UE is configured to the codebook based transmission. On the contrary, when higher layer parameter txConfig" is set to "nonCodebook", the UE is configured to the non-codebook based transmission. When higher layer parameter "txConfig" is not configured, the UE does not predict that the PUSCH is scheduled by DCI format 0_1. When the PUSCH is scheduled by DCI format 0_0, the PUSCH transmission is based on a single antenna port. In the case of the codebook based transmission, the PUSCH may be scheduled by DCI format 0_0, DCI format 0_1, or semi-statically. When the PUSCH is scheduled by DCI format 0_1, the UE determines a PUSCH transmission precoder based on the SRI, the Transmit Precoding Matrix Indicator (TPMI), and the transmission rank from the DCI as given by the SRS resource indicator and the Precoding information and number of layers field. The TPMI is used for indicating a precoder to be applied over the antenna port and when multiple SRS resources are configured, the TPMI corresponds to the SRS resource selected by the SRI. Alternatively, when the single SRS resource is configured, the TPMI is used for indicating the precoder to be applied over the antenna port and corresponds to the corresponding single SRS resource. A transmission precoder is selected from an uplink codebook having the same antenna port number as higher layer parameter "nrofSRS-Ports". When the UE is set to higher layer parameter "txConfig" set to "codebook", at least one SRS resource is configured in the UE. An SRI indicated in slot n is associated with most recent transmission of the SRS resource identified by the SRI and here, the SRS resource precedes PDCCH (i.e., slot n) carrying the SRI.

In the case of the non-codebook based transmission, the PUSCH may be scheduled by DCI format 0_0, DCI format 0_1, or semi-statically. When multiple SRS resources are configured, the UE may determine the PUSCH precoder and the transmission rank based on a wideband SRI and here, the SRI is given by the SRS resource indicator in the DCI or given by higher layer parameter "srs-ResourceIndicator". The UE may use one or multiple SRS resources for SRS transmission and here, the number of SRS resources may be configured for simultaneous transmission in the same RB based on the UE capability. Only one SRS port is configured for each SRS resource. Only one SRS resource may be configured to higher layer parameter "usage" set to "nonCodebook". The maximum number of SRS resources which may be configured for non-codebook based uplink transmission is 4. The SRI indicated in slot n is associated with most recent transmission of the SRS resource identified by the SRI and here, the SRS transmission precedes PDCCH (i.e., slot n) carrying the SRI.

Transform Precoder field

Hereinafter, a configuration related to the transform precoder which may be applied to embodiments to be described below will be described.

[Table 2]

| |
|---|
| *RACH-ConfigCommon* |
| The IE *RACH-ConfigCommon* is used to specify the cell specific random-access parameters. |

**RACH-ConfigCommon information element**

```
-- ASN1START
-- TAG-RACH-CONFIGCOMMON-START

RACH-ConfigCommon ::=                    SEQUENCE {
        rach-ConfigGeneric                RACH-ConfigGeneric,
        totalNumberOfRA-Preambles         INTEGER (1..63)
OPTIONAL,    -- Need S
        ssb-perRACH-OccasionAndCB-PreamblesPerSSB    CHOICE {
                oneEighth                          ENUMERATED
{n4,n8,n12,n16,n20,n24,n28,n32,n36,n40,n44,n48,n52,n56,n60,n64},
                oneFourth                          ENUMERATED
{n4,n8,n12,n16,n20,n24,n28,n32,n36,n40,n44,n48,n52,n56,n60,n64},
                oneHalf                            ENUMERATED
{n4,n8,n12,n16,n20,n24,n28,n32,n36,n40,n44,n48,n52,n56,n60,n64},
```

```
                one                                ENUMERATED
{n4,n8,n12,n16,n20,n24,n28,n32,n36,n40,n44,n48,n52,n56,n60,n64},
                two                                ENUMERATED
{n4,n8,n12,n16,n20,n24,n28,n32},
                four                               INTEGER (1..16),
                eight                              INTEGER (1..8),
                sixteen                            INTEGER (1..4)
        }
OPTIONAL,    -- Need M

        groupBconfigured                  SEQUENCE {
                ra-Msg3SizeGroupA                  ENUMERATED {b56, b144, b208, b256, b282, b480,
b640,
                                                   b800, b1000, b72, spare6,
spare5,spare4, spare3, spare2, spare1},
                messagePowerOffsetGroupB           ENUMERATED { minusinfinity, dB0, dB5, dB8,
dB10, dB12, dB15, dB18},
                numberOfRA-PreamblesGroupA         INTEGER (1..64)
        }
OPTIONAL,    -- Need R
        ra-ContentionResolutionTimer       ENUMERATED { sf8, sf16, sf24, sf32, sf40, sf48, sf56,
sf64},
        rsrp-ThresholdSSB                  RSRP-Range
OPTIONAL,    -- Need R
```

EP 4 668 687 A1

```
rsrp-ThresholdSSB-SUL                    RSRP-Range
OPTIONAL,      -- Cond SUL
      prach-RootSequenceIndex            CHOICE {
          l839                               INTEGER (0..837),
          l139                               INTEGER (0..137)
      },
      msg1-SubcarrierSpacing             SubcarrierSpacing
OPTIONAL,      -- Cond L139
      restrictedSetConfig                ENUMERATED {unrestrictedSet, restrictedSetTypeA,
restrictedSetTypeB},
      msg3-transformPrecoder             ENUMERATED {enabled}
OPTIONAL,      -- Need R
      ...,
      [[
      ra-PrioritizationForAccessIdentity-r16   SEQUENCE {
          ra-Prioritization-r16              RA-Prioritization,
          ra-PrioritizationForAI-r16         BIT STRING (SIZE (2))
      }
OPTIONAL,      -- Cond InitialBWP-Only
      prach-RootSequenceIndex-r16        CHOICE {
          l571                               INTEGER (0..569),
```

8

```
        11151                                    INTEGER (0..1149)
    }    OPTIONAL    -- Need R
    ]],
    [[
    ra-PrioritizationForSlicing-r17          RA-PrioritizationForSlicing-r17
OPTIONAL,      -- Cond InitialBWP-Only
        featureCombinationPreambles-r17 SEQUENCE (SIZE(1..maxFeatureCombPreambles-FFS-r17)) OF
FeatureCombinationPreambles-r17 OPTIONAL -- Need R
    ]]
-- Editor's Note: FFS where to implement CE-specific RACH-related parameters, e.g.
numberOfMsg3Repetitions, mcs-Msg3Repetition, is pending to RA partitioning conclusion on the structure
}


AdditionalRACH-ConfigCommon-r17 ::= SEQUENCE {
    rach-ConfigCommon-r17              RACH-ConfigCommon
OPTIONAL,   -- Need R
    msgA-ConfigCommon-r17             MsgA-ConfigCommon-r16
OPTIONAL,   -- Cond R

    ...

}
```

| RACH-ConfigCommon field descriptions |
|---|
| **featureCombinationPreambles** |
| Specifies a series of preamble partitions each associated to a combination of features and 4-step RA. |
| **messagePowerOffsetGroupB** |
| Threshold for preamble selection. Value is in dB. Value *minusinfinity* corresponds to –infinity. Value *dB0* corresponds to 0 dB, *dB5* corresponds to 5 dB and so on. (see TS 38.321 [3], clause 5.1.2) |
| **msg1-SubcarrierSpacing** |
| Subcarrier spacing of PRACH (see TS 38.211 [16], clause 5.3.2). Only the following values are applicable depending on the used frequency: FR1:  15 or 30 kHz FR2-1:  60 or 120 kHz FR2-2:  120, 480, or 960 kHz If absent, the UE applies the SCS as derived from the *prach-ConfigurationIndex* in *RACH-ConfigGeneric* (see tables Table 6.3.3.1-1, Table 6.3.3.1-2, Table 6.3.3.2-2 and Table 6.3.3.2-3, TS 38.211 [16]). The value also applies to contention free random access (*RACH-ConfigDedicated*), to SI-request and to contention-based beam failure recovery (CB-BFR). But it does not apply for contention free beam failure recovery (CF-BFR) (see *BeamFailureRecoveryConfig*). |
| **msg3-transformPrecoder** |
| Enables the transform precoder for Msg3 transmission according to clause 6.1.3 of TS 38.214 [19]. If the field is absent, the UE disables the transformer precoder (see TS 38.213 [13], clause 8.3). |
| **numberOfRA-PreamblesGroupA** |
| The number of CB preambles per SSB in group A. This determines implicitly the number of CB preambles per SSB available in group B. (see TS 38.321 [3], clause 5.1.1). The setting should be consistent with the setting of *ssb-perRACH-OccasionAndCB-PreamblesPerSSB*. |
| **prach-RootSequenceIndex** |

PRACH root sequence index (see TS 38.211 [16], clause 6.3.3.1). The value range depends on whether L=839 or L=139 or L=571 or L=1151. The length of the root sequence corresponding with the index indicated in this IE should be consistent with the one indicated in *prach-ConfigurationIndex* in the *RACH-ConfigDedicated* (if configured). If *prach-RootSequenceIndex-r16* is signalled, UE shall ignore the *prach-RootSequenceIndex* (without suffix).

For FR2-2, only the following values are applicable depending on the used subcarrier spacing:

120 kHz:   L=139, L=571, and L=1151

480 kHz:   L=139, and L=571

960 kHz:   L=139

---

*ra-ContentionResolutionTimer*

The initial value for the contention resolution timer (see TS 38.321 [3], clause 5.1.5). Value *sf8* corresponds to 8 subframes, value *sf16* corresponds to 16 subframes, and so on.

---

*ra-Msg3SizeGroupA*

Transport Blocks size threshold in bits below which the UE shall use a contention-based RA preamble of group A. (see TS 38.321 [3], clause 5.1.2).

---

*ra-Prioritization*

Parameters which apply for prioritized random access procedure on any UL BWP of SpCell for specific Access Identities (see TS 38.321 [3], clause 5.1.1a).

---

*ra-PrioritizationForAI*

Indicates whether the field *ra-Prioritization-r16* applies for Access Identities. The first/leftmost bit corresponds to Access Identity 1, the next bit corresponds to Access Identity 2. Value 1 indicates that the field *ra-Prioritization-r16* applies otherwise the field does not apply (see TS 23.501 [32]).

---

*rach-ConfigGeneric*

RACH parameters for both regular random access and beam failure recovery.

---

*restrictedSetConfig*

Configuration of an unrestricted set or one of two types of restricted sets, see TS 38.211 [16], clause 6.3.3.1.

---

*rsrp-ThresholdSSB*

UE may select the SS block and corresponding PRACH resource for path-loss estimation and (re)transmission based on SS blocks that satisfy the threshold (see TS 38.213 [13]).

---

*rsrp-ThresholdSSB-SUL*

The UE selects SUL carrier to perform random access based on this threshold (see TS 38.321 [3], clause 5.1.1). The value applies to all the BWPs.

---

*ssb-perRACH-OccasionAndCB-PreamblesPerSSB*

The meaning of this field is twofold: the CHOICE conveys the information about the number of SSBs per RACH occasion. Value *oneEighth* corresponds to one SSB associated with 8 RACH occasions, value *oneFourth* corresponds to one SSB associated with 4 RACH occasions, and so on. The ENUMERATED part indicates the number of Contention Based preambles per SSB. Value *n4* corresponds to 4 Contention Based preambles per SSB, value *n8* corresponds to 8 Contention Based preambles per SSB, and so on. The total number of CB preambles in a RACH occasion is given by *CB-preambles-per-SSB* * max(1, *SSB-per-rach-occasion*). See TS 38.213 [13].

> **totalNumberOfRA-Preambles**
>
> Total number of preambles used for contention based and contention free 4-step or 2-step random access in the RACH resources defined in *RACH-ConfigCommon*, excluding preambles used for other purposes (e.g. for SI request). If the field is absent, all 64 preambles are available for RA. The setting should be consistent with the setting of *ssb-perRACH-OccasionAndCB-PreamblesPerSSB*, i.e. it should be a multiple of the number of SSBs per RACH occasion.

Referring to Table 2, RACH-ConfigCommon includes an msg3-transformPrecoder parameter.

[Table 3]

*MsgA-PUSCH-Config*

The IE *MsgA-PUSCH-Config* is used to specify the PUSCH allocation for MsgA in 2-step random access type procedure.

**MsgA-PUSCH-Config information element**

-- ASN1START

-- TAG-MSGA-PUSCH-CONFIG-START

MsgA-PUSCH-Config-r16 ::=                                SEQUENCE {

    msgA-PUSCH-ResourceGroupA-r16                    MsgA-PUSCH-Resource-r16

OPTIONAL, -- Cond InitialBWPConfig

    msgA-PUSCH-ResourceGroupB-r16                    MsgA-PUSCH-Resource-r16

OPTIONAL, -- Cond GroupBConfigured

    msgA-TransformPrecoder-r16                        ENUMERATED {enabled, disabled}

OPTIONAL, -- Need R

    msgA-DataScramblingIndex-r16                     INTEGER (0..1023)

OPTIONAL, -- Need S

    msgA-DeltaPreamble-r16                            INTEGER (-1..6)

OPTIONAL   -- Need R

}

MsgA-PUSCH-Resource-r16 ::=                              SEQUENCE {

    msgA-MCS-r16                                      INTEGER (0..15),

    nrofSlotsMsgA-PUSCH-r16                           INTEGER (1..4),

    nrofMsgA-PO-PerSlot-r16                           ENUMERATED {one, two, three, six},

    msgA-PUSCH-TimeDomainOffset-r16                   INTEGER (1..32),

    msgA-PUSCH-TimeDomainAllocation-r16               INTEGER (1..maxNrofUL-Allocations)

OPTIONAL, -- Need S

    startSymbolAndLengthMsgA-PO-r16                   INTEGER (0..127)

OPTIONAL, -- Need S

    mappingTypeMsgA-PUSCH-r16                         ENUMERATED {typeA, typeB}

OPTIONAL, -- Need S

    guardPeriodMsgA-PUSCH-r16                         INTEGER (0..3)

OPTIONAL, -- Need R

    guardBandMsgA-PUSCH-r16                           INTEGER (0..1),

    frequencyStartMsgA-PUSCH-r16                      INTEGER

(0..maxNrofPhysicalResourceBlocks-1),

    nrofPRBs-PcrMsgA-PO-r16                           INTEGER (1..32),

    nrofMsgA-PO-FDM-r16                               ENUMERATED {one, two, four, eight},

```
    msgA-IntraSlotFrequencyHopping-r16              ENUMERATED {enabled}
OPTIONAL, -- Need R
    msgA-HoppingBits-r16                            BIT STRING (SIZE(2))
```

```
OPTIONAL, -- Cond FreqHopConfigured
    msgA-DMRS-Config-r16                            MsgA-DMRS-Config-r16,
    nrofDMRS-Sequences-r16                          INTEGER (1..2),
    msgA-Alpha-r16                                  ENUMERATED {alpha0, alpha04, alpha05,
alpha06,
                                                            alpha07, alpha08, alpha09,
alpha1}                    OPTIONAL, -- Need S
    interlaceIndexFirstPO-MsgA-PUSCH-r16            INTEGER (1..10)
OPTIONAL, -- Need R
    nrofInterlacesPerMsgA-PO-r16                    INTEGER (1..10)
OPTIONAL, -- Need R
    ...
}


MsgA-DMRS-Config-r16 ::=                            SEQUENCE {
    msgA-DMRS-AdditionalPosition-r16                ENUMERATED {pos0, pos1, pos3}
OPTIONAL, -- Need S
    msgA-MaxLength-r16                              ENUMERATED {len2}
OPTIONAL, -- Need S
    msgA-PUSCH-DMRS-CDM-Group-r16                   INTEGER (0..1)
OPTIONAL, -- Need S
    msgA-PUSCH-NrofPorts-r16                        INTEGER (0..1)
OPTIONAL, -- Need S
    msgA-ScramblingID0-r16                          INTEGER (0..65535)
OPTIONAL, -- Need S
    msgA-ScramblingID1-r16                          INTEGER (0..65535)
OPTIONAL   -- Need S
}
```

| |
|---|
| ***msgA-DataScramblingIndex*** |
| Identifier used to initiate data scrambling (c_init) for msgA PUSCH. If the field is absent the UE applies the value Physical cell ID (*physCellID*). |
| ***msgA-DeltaPreamble*** |
| Power offset of msgA PUSCH relative to the preamble received target power. Actual value = field value * 2 [dB] (see TS 38.213 [13], clause 7.1). |
| ***msgA-PUSCH-ResourceGroupA*** |
| MsgA PUSCH resources that the UE shall use when performing MsgA transmission using preambles group A. If field is not configured for the selected UL BWP, the UE shall use the MsgA PUSCH configuration for group A of initial UL BWP. |
| ***msgA-PUSCH-ResourceGroupB*** |
| MsgA PUSCH resources that the UE shall use when performing MsgA transmission using preambles group B. |

| |
|---|
| ***msgA-TransformPrecoder*** |
| Enables or disables the transform precoder for MsgA transmission (see clause 6.1.3 of TS 38.214 [19]). |

| ***MsgA-PUSCH-Resource* field descriptions** |
|---|
| ***guardBandMsgA-PUSCH*** |
| PRB-level guard band between FDMed PUSCH occasions (see TS 38.213 [13], clause 8.1A). If interlaced PUSCH is configured, value 0 is applied. |
| ***guardPeriodMsgA-PUSCH*** |
| Guard period between PUSCH occasions in the unit of symbols (see TS 38.213 [13], clause 8.1A). |
| ***frequencyStartMsgA-PUSCH*** |
| Offset of lowest PUSCH occasion in frequency domain with respect to PRB 0 (see TS 38.213 [13], clause 8.1A). |
| ***interlaceIndexFirstPO-MsgA-PUSCH*** |
| Interlace index of the first PUSCH occasion in frequency domain if interlaced PUSCH is configured. For 30kHz SCS only the integers 1, 2, 3, 4, 5 are applicable (see TS 38.213 [13], clause 8.1A). |
| ***mappingTypeMsgA-PUSCH*** |
| PUSCH mapping type A or B. If the field is absent, the UE shall use the parameter *msgA-PUSCH-TimeDomainAllocation* (see TS 38.213 [13], clause 8.1A). |
| ***msgA-Alpha*** |
| Dedicated alpha value for MsgA PUSCH. If the field is absent, the UE shall use the value of *msg3-Alpha* if configured, else UE applies value 1 (see TS 38.213 [13], clause 7.1.1). |
| ***msgA-DMRS-Config*** |
| DMRS configuration for msgA PUSCH (see TS 38.213 [13], clause 8.1A and TS 38.214 [19] clause 6.2.2). |
| ***msgA-HoppingBits*** |
| Value of hopping bits to indicate which frequency offset to be used for second hop. See Table 8.3-1 in TS 38.213 [13]. |
| ***msgA-IntraSlotFrequencyHopping*** |
| Intra-slot frequency hopping per PUSCH occasion (see TS 38.213 [13], clause 8.1A). |
| ***msgA-MCS*** |
| Indicates the MCS index for msgA PUSCH from the Table 6.1.4.1-1 for DFT-s-OFDM and Table 5.1.3.1-1 for CP-OFDM in TS 38.214 [19]. |

| |
|---|
| ***msgA-PUSCH-TimeDomainAllocation*** |
| Indicates a combination of start symbol and length and PUSCH mapping type from the TDRA table (*PUSCH-TimeDomainResourceAllocationList* if provided in *PUSCH-ConfigCommon*, or else the default Table 6.1.2.1.1-2 in 38.214 [19] is used if *pusch-TimeDomainAllocationList* is not provided in PUSCH-ConfigCommon). The parameter K2 in the table is not used for msgA PUSCH. The network configures one of *msgA-PUSCH-TimeDomainAllocation* and *startSymbolAndLengthMsgA-PO,* but not both. If the field is absent, the UE shall use the value of startSymbolAndLenghtMsgA-PO. |
| ***msgA-PUSCH-TimeDomainOffset*** |
| A single time offset with respect to the start of each PRACH slot (with at least one valid RO), counted as the number of slots (based on the numerology of active UL BWP). See TS 38.213 [13], clause 8.1A. |
| ***nrofDMRS-Sequences*** |
| Number of DMRS sequences for MsgA PUSCH for CP-OFDM. In case of single PUSCH configuration |

| |
|---|
| or if the DMRS symbols of multiple configurations are not overlapped, if the DMRS resources configured in one PUSCH occasion is no larger than 8 (for *len2*) or 4 (for *len1*), then only DMRS port is configured. |
| ***nrofInterlacesPerMsgA-PO*** <br> Number of consecutive interlaces per PUSCH occasion if interlaced PUSCH is configured. For 30kHz SCS only the integers 1, 2, 3, 4, 5 are applicable (see TS 38.213 [13], clause 8.1A). |
| ***nrofMsgA-PO-FDM*** <br> The number of msgA PUSCH occasions FDMed in one time instance (see TS 38.213 [13], clause 8.1A). |
| ***nrofMsgA-PO-PerSlot*** <br> Number of time domain PUSCH occasions in each slot. PUSCH occasions including guard period are contiguous in time domain within a slot (see TS 38.213 [13], clause 8.1A). |
| ***nrofPRBs-PerMsgA-PO*** <br> Number of PRBs per PUSCH occasion (see TS 38.213 [13], clause 8.1A). |
| ***nrofSlotsMsgA-PUSCH*** <br> Number of slots (in active UL BWP numerology) containing one or multiple PUSCH occasions, each slot has the same time domain resource allocation (see TS 38.213 [13], clause 8.1A). |
| ***startSymbolAndLengthMsgA-PO*** <br> An index giving valid combinations of start symbol, length and mapping type as start and length indicator (SLIV) for the first msgA PUSCH occasion, for RRC_CONNECTED UEs in non-initial BWP as described in TS 38.214 [19] clause 6.1.2. The network configures the field so that the allocation does not cross the slot boundary. The number of occupied symbols excludes the guard period. If the field is absent, the UE shall use the value in *msgA-PUSCH-TimeDomainAllocation* (see TS 38.213 [13], clause 8.1A). The network configures one of *msgA-PUSCH-TimeDomainAllocation* and *startSymbolAndLengthMsgA-PO,* but not both. If the field is absent, the UE shall use the value of *msgA-PUSCH-TimeDomainAllocation.* |

| ***MsgA-DMRS-Config*** field descriptions |
|---|
| ***msgA-DMRS-AdditionalPosition*** <br> Indicates the position for additional DM-RS. If the field is absent, the UE applies value *pos2*. |
| ***msgA-MaxLength*** <br> indicates single-symbol or double-symbol DMRS. If the field is absent, the UE applies value *len1*. |
| ***msgA-PUSCH-DMRS-CDM-Group*** <br> 1-bit indication of indices of CDM group(s). If the field is absent, then both CDM groups are used. |
| ***msgA-PUSCH-NrofPorts*** <br> 0 indicates 1 port per CDM group, 1 indicates 2 ports per CDM group. If the field is absent then 4 ports per CDM group are used (see TS 38.213 [13], clause 8.1A). |
| ***msgA-ScramblingID0*** <br> UL DMRS scrambling initialization for CP-OFDM. If the field is absent the UE applies the value Physical cell ID (*physCellID*). |
| ***msgA-ScramblingID1*** <br> UL DMRS scrambling initialization for CP-OFDM. If the field is absent the UE applies the value Physical cell ID (*physCellID*). |

Referring to Table 3, MsgA-PUSCH-Config includes an msgA-TransformPrecoder parameter.

[Table 4]

| PUSCH-Config |
| --- |

The IE *PUSCH-Config* is used to configure the UE specific PUSCH parameters applicable to a particular BWP.

**PUSCH-Config information element**

-- ASN1START

-- TAG-PUSCH-CONFIG-START


PUSCH-Config ::=                               SEQUENCE {

    dataScramblingIdentityPUSCH            INTEGER (0..1023)

OPTIONAL,     -- Need S

    txConfig                                             ENUMERATED {codebook, nonCodebook}

OPTIONAL,     -- Need S

    dmrs-UplinkForPUSCH-MappingTypeA        SetupRelease { DMRS-UplinkConfig }

OPTIONAL,     -- Need M

    dmrs-UplinkForPUSCH-MappingTypeB        SetupRelease { DMRS-UplinkConfig }

OPTIONAL,     -- Need M

    pusch-PowerControl                      PUSCH-PowerControl

OPTIONAL,     -- Need M

    frequencyHopping                        ENUMERATED {intraSlot, interSlot}

OPTIONAL,     -- Need S

    frequencyHoppingOffsetLists        SEQUENCE (SIZE (1..4)) OF INTEGER (1..

maxNrofPhysicalResourceBlocks-1)


OPTIONAL,     -- Need M

    resourceAllocation                      ENUMERATED { resourceAllocationType0,

resourceAllocationType1, dynamicSwitch},

    pusch-TimeDomainAllocationList          SetupRelease { PUSCH-

TimeDomainResourceAllocationList }          OPTIONAL,     -- Need M

    pusch-AggregationFactor                 ENUMERATED { n2, n4, n8 }

OPTIONAL,     -- Need S

    mcs-Table                                     ENUMERATED {qam256, qam64LowSE}

OPTIONAL,     -- Need S

    mcs-TableTransformPrecoder              ENUMERATED {qam256, qam64LowSE}

OPTIONAL,     -- Need S

    transformPrecoder                       ENUMERATED {enabled, disabled}

OPTIONAL,     -- Need S

    codebookSubset                           ENUMERATED {fullyAndPartialAndNonCoherent,

partialAndNonCoherent,nonCoherent}


OPTIONAL, -- Cond codebookBased

    maxRank                                  INTEGER (1..4)

OPTIONAL, -- Cond codebookBased

    rbg-Size                                 ENUMERATED { config2}


OPTIONAL, -- Need S

    uci-OnPUSCH                              SetupRelease { UCI-OnPUSCH}

OPTIONAL, -- Need M

```
        tp-pi2BPSK                              ENUMERATED {enabled}
OPTIONAL, -- Need S

        ...,

        [[
        minimumSchedulingOffsetK2-r16          SetupRelease { MinSchedulingOffsetK2-Values-r16 }
OPTIONAL,   -- Need M
        ul-AccessConfigListDCI-0-1-r16         SetupRelease { UL-AccessConfigListDCI-0-1-r16 }
OPTIONAL,   -- Need M
        -- Start of the parameters for DCI format 0_2 introduced in V16.1.0
        harq-ProcessNumberSizeDCI-0-2-r16              INTEGER (0..4)
OPTIONAL,    -- Need R
        dmrs-SequenceInitializationDCI-0-2-r16         ENUMERATED {enabled}
OPTIONAL,    -- Need S
        numberOfBitsForRV-DCI-0-2-r16                  INTEGER (0..2)
OPTIONAL,    -- Need R
        antennaPortsFieldPresenceDCI-0-2-r16           ENUMERATED {enabled}
OPTIONAL,    -- Need S
        dmrs-UplinkForPUSCH-MappingTypeA-DCI-0-2-r16          SetupRelease { DMRS-
UplinkConfig }               OPTIONAL,    -- Need M
        dmrs-UplinkForPUSCH-MappingTypeB-DCI-0-2-r16          SetupRelease { DMRS-
UplinkConfig }               OPTIONAL,    -- Need M
        frequencyHoppingDCI-0-2-r16                    CHOICE {
            pusch-RepTypeA                                  ENUMERATED {intraSlot,
interSlot},
            pusch-RepTypeB                                  ENUMERATED
{interRepetition, interSlot}
        }
OPTIONAL,    -- Need S
        frequencyHoppingOffsetListsDCI-0-2-r16   SetupRelease { FrequencyHoppingOffsetListsDCI-0-2-r16}
OPTIONAL,   -- Need M
        codebookSubsetDCI-0-2-r16              ENUMERATED {fullyAndPartialAndNonCoherent,
partialAndNonCoherent,nonCoherent}


OPTIONAL,    -- Cond codebookBased
        invalidSymbolPatternIndicatorDCI-0-2-r16       ENUMERATED {enabled}
OPTIONAL,    -- Need S
        maxRankDCI-0-2-r16                             INTEGER (1..4)
OPTIONAL,    -- Cond codebookBased
        mcs-TableDCI-0-2-r16                           ENUMERATED {qam256,
qam64LowSE}                 OPTIONAL,    -- Need S
        mcs-TableTransformPrecoderDCI-0-2-r16          ENUMERATED {qam256,
qam64LowSE}                 OPTIONAL,    -- Need S
        priorityIndicatorDCI-0-2-r16                   ENUMERATED {enabled}
OPTIONAL,    -- Need S
        pusch-RepTypeIndicatorDCI-0-2-r16              ENUMERATED { pusch-RepTypeA,
pusch-RepTypeB}  OPTIONAL,    -- Need R
```

```
resourceAllocationDCI-0-2-r16                          ENUMERATED
{ resourceAllocationType0, resourceAllocationType1, dynamicSwitch}


OPTIONAL,     -- Need M
      resourceAllocationType1GranularityDCI-0-2-r16          ENUMERATED { n2,n4,n8,n16 }
OPTIONAL,     -- Need S
      uci-OnPUSCH-ListDCI-0-2-r16                         SetupRelease { UCI-OnPUSCH-
ListDCI-0-2-r16}     OPTIONAL,     -- Need M
      pusch-TimeDomainAllocationListDCI-0-2-r16          SetupRelease { PUSCH-
TimeDomainResourceAllocationList-r16 }


OPTIONAL,     -- Need M
      -- End of the parameters for DCI format 0_2 introduced in V16.1.0
      -- Start of the parameters for DCI format 0_1 introduced in V16.1.0
      pusch-TimeDomainAllocationListDCI-0-1-r16          SetupRelease { PUSCH-
TimeDomainResourceAllocationList-r16 }


OPTIONAL,     -- Need M
      invalidSymbolPatternIndicatorDCI-0-1-r16          ENUMERATED {enabled}
OPTIONAL,     -- Need S
      priorityIndicatorDCI-0-1-r16                      ENUMERATED {enabled}
OPTIONAL,     -- Need S
      pusch-RepTypeIndicatorDCI-0-1-r16                 ENUMERATED { pusch-RepTypeA, pusch-
RepTypeB}          OPTIONAL,     -- Need R
      frequencyHoppingDCI-0-1-r16                       ENUMERATED {interRepetition, interSlot}
OPTIONAL,     -- Cond RepTypeB
      uci-OnPUSCH-ListDCI-0-1-r16                       SetupRelease { UCI-OnPUSCH-ListDCI-0-1-
r16   }               OPTIONAL,   -- Need M
      -- End of the parameters for DCI format 0_1 introduced in V16.1.0
      invalidSymbolPattern-r16                          InvalidSymbolPattern-r16
OPTIONAL,     -- Need S
      pusch-PowerControl-v1610                    SetupRelease {PUSCH-PowerControl-v1610}
OPTIONAL,     -- Need M
      ul-FullPowerTransmission-r16               ENUMERATED {fullpower, fullpowerMode1,
fullpowerMode2}          OPTIONAL,     -- Need R
      pusch-TimeDomainAllocationListForMultiPUSCH-r16   SetupRelease { PUSCH-
TimeDomainResourceAllocationList-r16 }


OPTIONAL,    --   Need M
      numberOfInvalidSymbolsForDL-UL-Switching-r16      INTEGER (1..4)
OPTIONAL       -- Cond RepTypeB2
      ]],
      [[
      ul-AccessConfigListDCI-0-2-r17          SetupRelease { UL-AccessConfigListDCI-0-2-r17 }
OPTIONAL,    -- Need M
```

| betaOffsetsCrossPri0-r17 | SetupRelease { BetaOffsetsCrossPriSel-r17 } |
|---|---|
| OPTIONAL,  -- Need M | |
| betaOffsetsCrossPri1-r17 | SetupRelease { BetaOffsetsCrossPriSel-r17 } |
| OPTIONAL,  -- Need M | |

```
betaOffsetsCrossPri0DCI-0-2-r17          SetupRelease { BetaOffsetsCrossPriSelDCI-0-2-r17 }
OPTIONAL,  -- Need M
    betaOffsetsCrossPri1DCI-0-2-r17          SetupRelease { BetaOffsetsCrossPriSelDCI-0-2-r17 }
OPTIONAL,  -- Need M
    mappingPattern-r17                       ENUMERATED {cyclicMapping, sequentialMapping}
OPTIONAL,  -- Need R
    secondTPCFieldDCI-0-1-r17                ENUMERATED {enabled}
OPTIONAL,  -- Need R
    secondTPCFieldDCI-0-2-r17                ENUMERATED {enabled}
OPTIONAL,  -- Need R
    sequenceOffsetForRV-r17                  INTEGER (0..3)
OPTIONAL,  -- Need R
    pusch-TimeDomainAllocationListForMultiPUSCH-r17    SetupRelease { PUSCH-
TimeDomainResourceAllocationList-r17 }

OPTIONAL,  --   Need M
    pusch-TimeDomainAllocationListDCI-0-2-r17          SetupRelease { PUSCH-
TimeDomainResourceAllocationList-r17 }

OPTIONAL,  --   Need M
    pusch-TimeDomainAllocationListDCI-0-1-r17          SetupRelease { PUSCH-
TimeDomainResourceAllocationList-r17 }

OPTIONAL, --   Need M
    ul-AccessConfigListDCI-0-1-r17           SetupRelease { UL-AccessConfigListDCI-0-1-r17 }
OPTIONAL,  -- Need M
    minimumSchedulingOffsetK2-r17            SetupRelease { MinSchedulingOffsetK2-Values-r17 }
OPTIONAL,  -- Need M
    availableSlotCounting-r17                ENUMERATED { enabled }
OPTIONAL,  -- Need S
    dmrs-BundlingPUSCH-Config-r17            SetupRelease { DMRS-BundlingPUSCH-Config-r17 }
OPTIONAL,  -- Need M
    harq-ProcessNumberSizeDCI-0-2-v1700      INTEGER (5)
OPTIONAL,  -- Need R
    harq-ProcessNumberSizeDCI-0-1-r17        INTEGER (5)
OPTIONAL    -- Need R
    ]]
}


UCI-OnPUSCH ::=                          SEQUENCE {
    betaOffsets                          CHOICE {
```

```
        dynamic                        SEQUENCE (SIZE (4)) OF BetaOffsets,
        semiStatic                     BetaOffsets
    }
OPTIONAL, -- Need M
    scaling                            ENUMERATED { f0p5, f0p65, f0p8, f1 }
}


MinSchedulingOffsetK2-Values-r16 ::=    SEQUENCE (SIZE
```

```
(1..maxNrOfMinSchedulingOffsetValues-r16)) OF INTEGER (0..maxK2-SchedulingOffset-r16)


MinSchedulingOffsetK2-Values-r17 ::=    SEQUENCE (SIZE (1..maxNrOfMinSchedulingOffsetValues-
r16)) OF INTEGER (0..maxK2-SchedulingOffset-r17)


UCI-OnPUSCH-DCI-0-2-r16 ::=             SEQUENCE {
    betaOffsetsDCI-0-2-r16                 CHOICE {
        dynamicDCI-0-2-r16                     CHOICE {
            oneBit-r16                             SEQUENCE (SIZE (2)) OF BetaOffsets,
            twoBits-r16                            SEQUENCE (SIZE (4)) OF BetaOffsets
        },
        semiStaticDCI-0-2-r16              BetaOffsets
    }
OPTIONAL,    -- Need M
    scalingDCI-0-2-r16                 ENUMERATED { f0p5, f0p65, f0p8, f1 }
}


FrequencyHoppingOffsetListsDCI-0-2-r16 ::=   SEQUENCE (SIZE (1..4)) OF INTEGER (1..
maxNrofPhysicalResourceBlocks-1)


UCI-OnPUSCH-ListDCI-0-2-r16 ::=   SEQUENCE (SIZE (1..2)) OF UCI-OnPUSCH-DCI-0-2-r16


UCI-OnPUSCH-ListDCI-0-1-r16 ::=   SEQUENCE (SIZE (1..2)) OF UCI-OnPUSCH


UL-AccessConfigListDCI-0-1-r16 ::= SEQUENCE (SIZE (1..64)) OF INTEGER (0..63)


UL-AccessConfigListDCI-0-1-r17 ::= SEQUENCE (SIZE (1..3)) OF INTEGER (0..2)


UL-AccessConfigListDCI-0-2-r17 ::= SEQUENCE (SIZE (1..64)) OF INTEGER (0..63)


BetaOffsetsCrossPriSel-r17 ::= CHOICE {
    dynamic-r17             SEQUENCE (SIZE (4)) OF BetaOffsetsCrossPri-r17,
    semiStatic-r17          BetaOffsetsCrossPri-r17
}


BetaOffsetsCrossPriSelDCI-0-2-r17 ::= CHOICE {
    dynamicDCI-0-2-r17         CHOICE {
```

```
        oneBit-r17              SEQUENCE (SIZE (2)) OF BetaOffsetsCrossPri-r17,

        twoBits-r17             SEQUENCE (SIZE (4)) OF BetaOffsetsCrossPri-r17

    },

    semiStaticDCI-0-2-r17    BetaOffsetsCrossPri-r17

}
```

| ***PUSCH-Config* field descriptions** |
|---|
| ***antennaPortsFieldPresenceDCI-0-2*** <br> Configure the presence of "Antenna ports" field in DCI format 0_2. When the field is configured, then the "Antenna ports" field is present in DCI format 0_2. Otherwise, the field size is set to 0 for DCI format 0_2 (See TS 38.212 [17], clause 7.3.1.1.3). If neither *dmrs-UplinkForPUSCH-MappingTypeA-DCI-0-2* nor *dmrs-UplinkForPUSCH-MappingTypeB-DCI-0-2* is configured, this field is absent. |
| ***availableSlotCounting*** <br> Indicate whether PUSCH repetitions counted on the basis of available slots is enabled. If the field is absent, PUSCH repetitions counted on the basis of available slots is disabled. |
| ***betaOffsetsCrossPri0, betaOffsetsCrossPri1, betaOffsetsCrossPri0DCI-0-2, betaOffsetsCrossPri1DCI-0-2*** <br> Selection between and configuration of dynamic and semi-static beta-offset for multiplexing HARQ-ACK on dynamically scheduled PUSCH with different priorities, see TS 38.213 [13], clause 9.3. <br> The field *betaOffsetsCrossPrio0* indicates multiplexing low priority (LP) HARQ-ACK on dynamically scheduled high priority (HP) PUSCH. <br> The field *betaOffsetsCrossPrio1* indicates multiplexing HP HARQ-ACK on dynamically scheduled LP PUSCH. <br> The field *betaOffsetsCrossPrio0DCI-0-2* indicates multiplexing LP HARQ-ACK on dynamically scheduled HP PUSCH by DCI format 0_2. <br> The field *betaOffsetsCrossPrio1DCI-0-2* indicates multiplexing HP HARQ-ACK on dynamically scheduled LP PUSCH by DCI format 0_2. |
| ***codebookSubset, codebookSubsetDCI-0-2*** <br> Subset of PMIs addressed by TPMI, where PMIs are those supported by UEs with maximum coherence capabilities (see TS 38.214 [19], clause 6.1.1.1). The field *codebookSubset* applies to DCI format 0_1 and the field *codebookSubsetDCI-0-2* applies to DCI format 0_2 (see TS 38.214 [19], clause 6.1.1.1). |
| ***dataScramblingIdentityPUSCH*** <br> Identifier used to initialise data scrambling (c_init) for PUSCH. If the field is absent, the UE applies the physical cell ID. (see TS 38.211 [16], clause 6.3.1.1). |
| ***dmrs-BundlingPUSCH-Config*** <br> Configure the parameters for DMRS bundling for PUSCH (see TS 38.214 [19], clause 6.1.7). |
| ***dmrs-SequenceInitializationDCI-0-2*** <br> Configure whether the field "DMRS Sequence Initialization" is present or not in DCI format 0_2. If the field is absent, then 0 bit for the field "DMRS Sequence Initialization" in DCI format 0_2. If the field is present, then the number of bits is determined in the same way as DCI format 0_1 (see TS 38.212 [17], clause 7.3.1). |
| ***dmrs-UplinkForPUSCH-MappingTypeA, dmrs-UplinkForPUSCH-MappingTypeA-DCI-0-2*** <br> DMRS configuration for PUSCH transmissions using PUSCH mapping type A (chosen dynamically via *PUSCH-TimeDomainResourceAllocation*). Only the fields *dmrs-Type*, *dmrs-AdditionalPosition* and *maxLength* may be set differently for mapping type A and B. The field *dmrs-UplinkForPUSCH-* |

*MappingTypeA* applies to DCI format 0_1 and the field *dmrs-UplinkForPUSCH-MappingTypeA-DCI-0-2* applies to DCI format 0_2 (see TS 38.212 [17], clause 7.3.1).

---

**dmrs-UplinkForPUSCH-MappingTypeB, dmrs-UplinkForPUSCH-MappingTypeB-DCI-0-2**

DMRS configuration for PUSCH transmissions using PUSCH mapping type B (chosen dynamically via *PUSCH-TimeDomainResourceAllocation*). Only the fields *dmrs-Type*, *dmrs-AdditionalPosition* and *maxLength* may be set differently for mapping type A and B. The field *dmrs-UplinkForPUSCH-MappingTypeB* applies to DCI format 0_1 and the field *dmrs-UplinkForPUSCH-MappingTypeB-DCI-0-2* applies to DCI format 0_2 (see TS 38.212 [17], clause 7.3.1).

---

**frequencyHopping**

The value *intraSlot* enables 'Intra-slot frequency hopping' and the value *interSlot* enables 'Inter-slot frequency hopping'. If the field is absent, frequency hopping is not configured for 'pusch-RepTypeA' (see TS 38.214 [19], clause 6.3). The field *frequencyHopping* applies to DCI format 0_0 and 0_1 for 'pusch-RepTypeA'.

---

**frequencyHoppingDCI-0-1**

Indicates the frequency hopping scheme for DCI format 0_1 when *pusch-RepTypeIndicatorDCI-0-1* is set to 'pusch-RepTypeB', The value *interRepetition* enables 'Inter-repetition frequency hopping', and the value *interSlot* enables 'Inter-slot frequency hopping'. If the field is absent, frequency hopping is not configured for DCI format 0_1 (see TS 38.214 [19], clause 6.1).

---

**frequencyHoppingDCI-0-2**

Indicate the frequency hopping scheme for DCI format 0_2. The value *intraSlot* enables 'intra-slot frequency hopping', and the value *interRepetition* enables 'Inter-repetition frequency hopping', and the value *interSlot* enables 'Inter-slot frequency hopping'. When *pusch-RepTypeIndicatorDCI-0-2* is set to '*pusch-RepTypeA*', the frequency hopping scheme can be chosen between 'intra-slot frequency hopping' and 'inter-slot frequency hopping' if enabled. When *pusch-RepTypeIndicatorDCI-0-2* is set to '*pusch-RepTypeB*', the frequency hopping scheme can be chosen between 'inter-repetition frequency hopping' and 'inter-slot frequency hopping' if enabled. If the field is absent, frequency hopping is not configured for DCI format 0_2 for 'pusch-RepTypeB' (see TS 38.214 [19], clause 6.3).

---

**frequencyHoppingOffsetLists, frequencyHoppingOffsetListsDCI-0-2**

Set of frequency hopping offsets used when frequency hopping is enabled for granted transmission (not msg3) and type 2 configured grant activation (see TS 38.214 [19], clause 6.3). The field *frequencyHoppingOffsetLists* applies to DCI format 0_0 and DCI format 0_1 and the field *frequencyHoppingOffsetListsDCI-0-2* applies to DCI format 0_2 (see TS 38.214 [19], clause 6.3).

---

**harq-ProcessNumberSizeDCI-0-2**

Configure the number of bits for the field "HARQ process number" in DCI format 0_2 (see TS 38.212 [17], clause 7.3.1).

---

**invalidSymbolPattern**

Indicates one pattern for invalid symbols for PUSCH transmission repetition type B applicable to both DCI format 0_1 and 0_2. If *InvalidSymbolPattern* is not configured, semi-static flexible symbols are used for PUSCH. Segmentation occurs only around semi-static DL symbols (see TS 38.214 [19] clause 6.1).

**invalidSymbolPatternIndicatorDCI-0-1, invalidSymbolPatternIndicatorDCI-0-2**

Indicates the presence of an additional bit in the DCI format 0_1/0_2. If *invalidSymbolPattern* is absent, then both *invalidSymbolPatternIndicatorDCI-0-1* and *invalidSymbolPatternIndicatorDCI-0-2* are absent. The field *invalidSymbolPatternIndicatorDCI-0-1* applies to the DCI format 0_1 and the field *invalidSymbolPatternIndicatorDCI-0-2* applies to DCI format 0_2 (see TS 38.214 [19] clause 6.1). If the field is absent, the UE behaviour is specified in TS 38.214 [19], clause 6.1.2.1.

---

**mappingPattern**

Indicates whether the UE should follow Cyclical mapping pattern or Sequential mapping pattern for when two SRS resource sets are configured for PUSCH transmission and the PUSCH transmission occasions are associated with both SRS resource sets.

**maxRank, maxRankDCI-0-2**

Subset of PMIs addressed by TRIs from 1 to ULmaxRank (see TS 38.214 [19], clause 6.1.1.1). The field *maxRank* applies to DCI format 0_1 and the field *maxRankDCI-0-2* applies to DCI format 0_2 (see TS 38.214 [19], clause 6.1.1.1).

**mcs-Table, mcs-TableFormat0-2**

Indicates which MCS table the UE shall use for PUSCH without transform precoder (see TS 38.214 [19], clause 6.1.4.1). If the field is absent the UE applies the value 64QAM. The field *mcs-Table* applies to DCI format 0_0 and DCI format 0_1 and the field *mcs-TableDCI-0-2* applies to DCI format 0_2 (see TS 38.214 [19], clause 6.1.4.1).

**mcs-TableTransformPrecoder, mcs-TableTransformPrecoderDCI-0-2**

Indicates which MCS table the UE shall use for PUSCH with transform precoding (see TS 38.214 [19], clause 6.1.4.1) If the field is absent the UE applies the value 64QAM. The field *mcs-TableTransformPrecoder* applies to DCI format 0_0 and DCI format 0_1 and the field *mcs-TableTransformPrecoderDCI-0-2* applies to DCI format 0_2 (see TS 38.214 [19], clause 6.1.4.1).

**minimumSchedulingOffsetK2**

List of minimum K2 values. Minimum K2 parameter denotes minimum applicable value(s) for the *Time domain resource assignment* table for PUSCH (see TS 38.214 [19], clause 6.1.2.1).

**numberOfBitsRV-DCI-0-2**

Configures the number of bits for "Redundancy version" in the DCI format 0_2 (see TS 38.212 [17], clause 7.3.1 and TS 38.214 [19], clause 6.1.2.1).

**numberOfInvalidSymbolsForDL-UL-Switching**

Indicates the number of symbols after the last semi-static DL symbol that are invalid symbols for PUSCH repetition Type B. If it is absent, no symbol is explicitly defined for DL-to-UL switching (see TS 38.214 [19], clause 6.1).

**priorityIndicatorDCI-0-1, priorityIndicatorDCI-0-2**

Configures the presence of "priority indicator" in DCI format 0_1/0_2. When the field is absent in the IE, then the UE shall apply 0 bit for "Priority indicator" in DCI format 0_1/0_2. The field *priorityIndicatorDCI-0-1* applies to DCI format 0_1 and the field *priorityIndicatorDCI-0-2* applies to DCI format 0_2 (see TS 38.212 [17] clause 7.3.1 and TS 38.213 [13] clause 9).

**pusch-AggregationFactor**

Number of repetitions for data (see TS 38.214 [19], clause 6.1.2.1). If the field is absent the UE applies the value 1.

***pusch-RepTypeIndicatorDCI-0-1, pusch-RepTypeIndicatorDCI-0-2***

Indicates whether UE follows the behavior for "PUSCH repetition type A" or the behavior for "PUSCH repetition type B" for the PUSCH scheduled by DCI format 0_1/0_2 and for Type 2 CG associated with the activating DCI format 0_1/0_2.The value *pusch-RepTypeA* enables the 'PUSCH repetition type A' and the value *pusch-RepTypeB* enables the 'PUSCH repetition type B'. The field *pusch-RepTypeIndicatorDCI-0-1* applies to DCI format 0_1 and the field *pusch-RepTypeIndicatorDCI-0-2* applies to DCI format 0_2 (see TS 38.214 [19], clause 6.1.2.1).

***pusch-TimeDomainAllocationList***

List of time domain allocations for timing of UL assignment to UL data (see TS 38.214 [19], table 6.1.2.1.1-1). The field *pusch-TimeDomainAllocationList* applies to DCI formats 0_0 or DCI format 0_1 when the field *pusch-TimeDomainAllocationListDCI-0-1* is not configured (see TS 38.214 [19], table 6.1.2.1.1-1 and table 6.1.2.1.1-1A). The network does not configure the *pusch-TimeDomainAllocationList* (without suffix) simultaneously with the *pusch-TimeDomainAllocationListDCI-0-2-r16* or *pusch-TimeDomainAllocationListDCI-0-1-r16* or *pusch-TimeDomainAllocationListForMultiPUSCH-r16*.

***pusch-TimeDomainAllocationListDCI-0-1***

Configuration of the time domain resource allocation (TDRA) table for DCI format 0_1 (see TS 38.214 [19], clause 6.1, table 6.1.2.1.1-1A).

***pusch-TimeDomainAllocationListDCI-0-2***

Configuration of the time domain resource allocation (TDRA) table for DCI format 0_2 (see TS 38.214 [19], clause 6.1.2, table 6.1.2.1.1-1B).

***pusch-TimeDomainAllocationListForMultiPUSCH***

Configuration of the time domain resource allocation (TDRA) table for multiple PUSCH (see TS 38.214 [19], clause 6.1.2). The field *pusch-TimeDomainAllocationListForMultiPUSCH-r17* is applicable for PUSCH SCS of 120 kHz, 480 and 960 kHz. The network configures at most 16 rows in this TDRA table in *PUSCH-TimeDomainResourceAllocationList-r16* configured by this field and at most 16 rows in *PUSCH-TimeDomainResourceAllocationList-r17*. This field is not configured simultaneously with *pusch-AggregationFactor*.

***rbg-Size***

Selection between configuration 1 and configuration 2 for RBG size for PUSCH. The UE does not apply this field if *resourceAllocation* is set to *resourceAllocationType1*. Otherwise, the UE applies the value *config1* when the field is absent (see TS 38.214 [19], clause 6.1.2.2.1).

***resourceAllocation, resourceAllocationDCI-0-2***

Configuration of resource allocation type 0 and resource allocation type 1 for non-fallback DCI (see TS 38.214 [19], clause 6.1.2). The field *resourceAllocation* applies to DCI format 0_1 and the field *resourceAllocationDCI-0-2* applies to DCI format 0_2 (see TS 38.214 [19], clause 6.1.2).

***resourceAllocationType1GranularityDCI-0-2***

Configures the scheduling granularity applicable for both the starting point and length indication for resource allocation type 1 in DCI format 0_2. If this field is absent, the granularity is 1 PRB (see TS 38.214 [19], clause 6.1.2.2.2).

***secondTPCFieldDCI-0-1, secondTPCFieldDCI-0-2***

A second TPC field can be configured via RRC for DCI-0-1 and DCI-0-2. Each TPC field is for each closed-loop index value respectively (i.e., 1st /2nd TPC fields correspond to "closedLoopIndex" value = 0 and 1,

| |
|---|
| ***sequenceOffsetForRV***<br>Configures the RV offset for the starting RV for the first repetition (first actual repetition in PUSCH repetition Type B) towards the second 'SRS resource set' for PUSCH. |
| ***tp-pi2BPSK***<br>Enables pi/2-BPSK modulation with transform precoding if the field is present and disables it otherwise. |

| |
|---|
| ***transformPrecoder***<br>The UE specific selection of transformer precoder for PUSCH (see TS 38.214 [19], clause 6.1.3). When the field is absent the UE applies the value of the field *msg3-transformPrecoder*. |
| ***txConfig***<br>Whether UE uses codebook based or non-codebook based transmission (see TS 38.214 [19], clause 6.1.1). If the field is absent, the UE transmits PUSCH on one antenna port, see TS 38.214 [19], clause 6.1.1. |
| ***uci-OnPUSCH-ListDCI-0-1, uci-OnPUSCH-ListDCI-0-2***<br>Configuration for up to 2 HARQ-ACK codebooks specific to DCI format 0_1/0_2. The field uci-OnPUSCH-ListDCI-0-1 applies to DCI format 0_1 and the field uci-OnPUSCH-ListDCI-0-2 applies to DCI format 0_2 (see TS 38.212 [17], clause 7.3.1 and TS 38.213 [13] clause 9.3). |
| ***ul-AccessConfigListDCI-0-1, ul-AccessConfigListDCI-0-2***<br>List of the combinations of cyclic prefix extension, channel access priority class (CAPC), and UL channel access type (see TS 38.212 [17], Table 7.3.1.1.2-35) applicable for DCI format 0_1 and DCI format 0_2, respectively. The field *ul-AccessConfigListDCI-0-1-r17* only contains a list of UL channel access types and is only applicable for FR2-2 (see TS 38.212 [17], Table 7.3.1.1.2-35A). |
| ***ul-FullPowerTransmission***<br>Configures the UE with UL full power transmission mode as specified in TS 38.213. |

| ***UCI-OnPUSCH* field descriptions** |
|---|
| ***betaOffsets***<br>Selection between and configuration of dynamic and semi-static beta-offset for DCI formats other than DCI format 0_2. If the field is not configured, the UE applies the value 'semiStatic' (see TS 38.213 [13], clause 9.3). |
| ***scaling***<br>Indicates a scaling factor to limit the number of resource elements assigned to UCI on PUSCH for DCI formats other than DCI format 0_2. Value *f0p5* corresponds to 0.5, value *f0p65* corresponds to 0.65, and so on. The value configured herein is applicable for PUSCH with configured grant (see TS 38.212 [17], clause 6.3). |

| ***UCI-OnPUSCH-DCI-0-2* field descriptions** |
|---|
| ***betaOffsetsDCI-0-2***<br>Configuration of beta-offset for DCI format 0_2. If semiStaticDCI-0-2 is chosen, the UE shall apply the value of 0 bit for the field of beta offset indicator in DCI format 0_2. If dynamicDCI-0-2 is chosen, the UE shall apply the value of 1 bit or 2 bits for the field of beta offset indicator in DCI format 0_2 (see TS 38.212 [17], clause 7.3.1 and TS 38.213 [13] clause 9.3). |
| ***dynamicDCI-0-2***<br>Indicates the UE applies the value 'dynamic' for DCI format 0_2 (see TS 38.212 [17], clause 7.3.1 and TS 38.213 [13], clause 9.3). |

| | |
|---|---|
| ***semiStaticDCI-0-2*** | |
| Indicates the UE applies the value 'semiStatic' for DCI format 0_2. (see TS 38.212 [17], clause 7.3.1 and see TS 38.213 [13], clause 9.3). | |
| ***scalingDCI-0-2*** | |
| Indicates a scaling factor to limit the number of resource elements assigned to UCI on PUSCH for DCI format 0_2. Value f0p5 corresponds to 0.5, value *f0p65* corresponds to 0.65, and so on (see TS 38.212 [17], clause 6.3). | |

| Conditional Presence | Explanation |
|---|---|
| *codebookBased* | The field is mandatory present if *txConfig* is set to codebook and absent otherwise. |
| *RepTypeB* | The field is optionally present, Need S, if *pusch-RepTypeIndicatorDCI-0-1* is set to pusch-RepTypeB. It is absent otherwise. |
| *RepTypeB2* | The field is optionally present, Need S, if *pusch-RepTypeIndicatorDCI-0-1* or *pusch-RepTypeIndicatorDCI-0-2* is set to pusch-RepTypeB. It is absent otherwise. |

Referring to Table 4, PUSCH-Config includes a transformPrecoder parameter.

The contents (the uplink channel structure, the uplink transmission/reception operation, and the Transform Precoder related configuration (Tables 2 to 4), etc.) described above may be applied in combination with methods proposed by the present disclosure to be described below or may be supplemented to clarify technical features of the methods proposed in the present disclosure. Methods to be described below are just distinguished for convenience and it is needless to say that some components of any one method may be substituted with some components of another method or may be applied in combination with each other.

Dynamic waveform switching (DWS) may be supported for coverage enhancement in NR. Hereinafter, a method for configuring a UL waveform of a UE according to a DCI format type and a situation when an indication field for the DWS is supported will be specifically described.

In a current NR, which waveform of CP-OFDM and DFT-S-OFDM is to be used is defined to be indicated through RRC signaling (e.g., SIB1, UE specific RRC signaling, etc.).

Specifically, in a 4-step RACH procedure, a waveform of an Msg. 3 PUSCH may be configured/indicated/determined as follows.

When the "msg3-transformPrecoder" is configured/indicated to be enabled (that is, when the UE receives a configuration including the msg3-transformPrecoder parameter (e.g., RACH-ConfigCommon in Table 2) from the base station), the transform precoder for Msg3 transmission is enabled. In other words, transform precoding for transmitting an Msg. 3 PUSCH is enabled. In this case, the UE uses the DFT-S-OFDM as a waveform of the Msg. 3 PUSCH.

When the "msg3-transformPrecoder" parameter field is empty (that is, when the UE receives a configuration without the msg3-transformPrecoder parameter (e.g., RACH-ConfigCommon in Table 2) from the base station, a transform precoder for Msg3 transmission is disabled. In other words, the transform precoding for transmitting the Msg. 3 PUSCH is disabled. In this case, the UE uses the CF-OFDM as the waveform of the Msg. 3 PUSCH.

In the case of a 2-step RACH procedure, a waveform of an MsgA PUSCH may be configured/indicated/determined as follows.

When the "msgA-TransformPrecoder" is configured/indicated to be enabled (that is, when the UE receives a configuration including the msgA-TransformPrecoder parameter configured to be 'enabled' (e.g., MsgA-PUSCH-Config in Table 3) from the base station), a transform precoder for MsgA transmission is enabled. In other words, transform precoding for transmitting an MsgA PUSCH is enabled. In this case, the UE uses the DFT-S-OFDM as a waveform of the MsgA PUSCH.

When the "msgA-TransformPrecoder" is configured/indicated to be disabled (that is, when the UE receives a configuration including the msgA-TransformPrecoder parameter configured to be 'disabled' (e.g., MsgA-PUSCH-Config in Table 3) from the base station), a transform precoder for MsgA transmission is disabled. In other words, transform precoding for transmitting the MsgA PUSCH is disabled. In this case, the UE uses the CP-OFDM as the waveform of the MsgA PUSCH.

Other UL channels other than the Msg. 3 PUSCH and Msg. A PUSCH (e.g., normal PUSCH, configured PUSCH, etc.) may be configured/indicated/determined as follows.

When the "transformPrecoder" is configured/indicated to be enabled (that is, when the UE receives a configuration including the transformPrecoder parameter configured to be 'enabled' (e.g., PUSCH-Config in Table 4) from the base station), a transform precoder for transmitting the other UL channel (e.g., PUSCH) is enabled. In other words, transform precoding for transmitting the other UL channel (e.g., PUSCH) is enabled. In this case, the UE uses the DFT-S-OFDM as a waveform of the other UL channel (e.g., PUSCH).

When the "transformPrecoder" is configured/indicated to be disabled (that is, when the UE receives a configuration including the transformPrecoder parameter configured to be 'disabled' (e.g., PUSCH-Config in Table 4) from the base station), the transform precoder for transmitting the other UL channel (e.g., PUSCH) is disabled. In other words, transform precoding for transmitting the other UL channel (e.g., PUSCH) is disabled. In this case, the UE uses the CP-OFDM as the waveform of the other UL channel (e.g., PUSCH).

Further, when the corresponding "transformPrecoder" parameter is not separately indicated, the UE operates according to the configuration of "msg3-transformPrecother". Transform precoding is applied or not applied based on the configuration (enabled or disabled) of msgA-TransformPrecoder. In other words, whether transform precoding is applied to uplink transmission may be determined based on the configuration (enabled or disabled) of the msgA-TransformPrecoder.

Meanwhile, the dynamic waveform switching operation is considered for UL coverage enhancement of an existing NR system. Thus, when an explicit filed of N bits (e.g., N = 1) for dynamic waveform switching is introduced, a UE/base station operation related to corresponding field needs to be additionally defined.

The present disclosure proposes a method for configuring a UL waveform of a UE according to a DCI format type and a situation when an indication field for dynamic waveform switching is supported.

Method 1.1

Hereinafter, the method for configuring the UL waveform of the UE according to the DCI format type and the situation when the indication field for the dynamic waveform switching is supported will be specifically described.

According to an embodiment, an N-bit indication field (e.g. N = 1) for indicating dynamic waveform switching may be explicitly introduced into the DCI. In other words, a method for reinterpreting an existing DCI field for indicating the dynamic waveform switching or differently configuring a DCI field according to an UL waveform may be considered. Unlike the above-described method (DCI field reinterpretation/DCI field is configured differently), the embodiment introduces an N-bit indication field (e.g. N = 1) dedicated to a cell supporting the dynamic waveform switching is introduced. That is, a change of the UL waveform (or a state of the UL waveform) may be performed based on an N-bit indication field newly added to/defined in the DCI. The embodiment may be extended to a method for introducing an explicit indication field that is not present in related art and changing the UL waveform through the bit value of the indication field.

Dynamic waveform switching (DWS) may be indicated based on PUSCH-Config which the base station may configure for each BWP. Specifically, the dynamic waveform switching (DWS) may be indicated based on the RRC parameter within the PUSCH-Config. The RRC parameter may be i) an existing parameter included in the PUSCH-Config, or ii) a parameter newly defined in/added to the PUSCH-Config (e.g., dynamicTransformPrecoderIndicationDCI).

Whether the N-bit indication field is present within the DCI may be indicated based on a value of the corresponding RRC parameter. The UE may determine that the dynamic waveform switching is enabled in the BWP based on the RRC parameter within the PUSCH-config. The UE may then determine that the transmitted DCI includes a field configuration (N-bit indication field) for the dynamic waveform switching. Hereinafter, specific examples will be described.

As an example, the value of the RRC parameter may be 'enabled', 'dynamic', or 'dynamic switching'. 1) When the UE receives the PUSCH-Config including the RRC parameter, the UE may expect the N-bit indication field to be included within the DCI. The UE may determine whether to apply transform precoding based on the N-bit indication field. 2) When the UE receives PUSCH-Config in which the RRC parameter is absent, the UE may not expect the N-bit indication field to be included within the DCI. That is, in this case, an existing operation other than the DWS may be performed. Specifically, the UE may determine whether to apply the transform precoding based on the 'transformPrecoder' parameter.

As an example, the value of the RRC parameter may be 'enabled' or 'disabled'. The UE may receive the PUSCH-Config including the RRC parameter. 1) When the RRC parameter is configured to be 'enabled', the UE may expect the N-bit indication field to be included within the DCI. The UE may determine whether to apply the transform precoding based on the N-bit indication field. 2) When the RRC parameter is configured to be 'disabled', the UE may not expect the N-bit indication field to be included within the DCI. That is, in this case, an existing operation other than the DWS may be performed. Specifically, the UE may determine whether to apply the transform precoding based on the 'transformPrecoder' parameter.

The above-described indications related to the DWS may be defined only for a specific DCI format(s). As an example, the above-described RRC parameter may include i) an RRC parameter representing whether an N-bit indication field is present in DCI format 0_1 and/or ii) an RRC parameter representing whether the N-bit indication field is present in DCI format 0_2.

When an n N-bit indication field for indicating the waveform is present in DCI format 0_2/DCI format 0_1 (e.g. N = 1), a waveform to be used by the UE for PUSCH transmission may be configured according to a value dynamically indicated by the base station.

Specifically, it may be determined that the N-bit indication field is present in DCI (e.g., DCI format 0_1 and/or DCI format 0_2) based on the RRC parameter value within the PUSCH-Config configured for each BWP. In this case, it may be assumed that the UE receives (or monitors) DCI format 0_2 or DCI format 0_1 in which the N-bit indication field (e.g., N = 1) is present.

In this case, the UE may disregard a configuration/indication value (e.g., a waveform related configuration value or a transform Precoding/transformPrecoder related configuration value) based on parameters used for an initial access (e.g., SIB, parameters, "msg3-transformPrecoder", and "msgA-TransformPrecoder"). The UE may transmit the PUSCH by using the waveform dynamically configured/indicated through the DCI. The UE may determine whether to apply the transform precoding for the PUSCH based on the N-bit indication field of the DCI.

On the other hand, it is necessary to define how the UE is to operate when receiving DCI in which the N-bit indication field is absent. Specifically, it may be determined that the N-bit indication field is present in the DCI (e.g., DCI format 0_1 and/or DCI format 0_2) based on the RRC parameter value within the PUSCH-Config configured for each BWP. In this case, it may be assumed that the UE receives (or monitors) a DCI format (e.g., DCI format 0_2 or DCI format 0_0) in which the N-bit indication field (e.g., N = 1) is not present. In this case, it may be necessary to define which waveform the UE should use to transmit the PUSCH.

The UE may operate according to a setting/indication value (e.g., a waveform related configuration value or a transform Precoding/transformPrecoder related setting value) based on parameters used for an initial access (e.g., SIB, parameters, "msg3-transformPrecoder", and "msgA-TransformPrecoder"). As an example, when the msg3-transform-Precoder parameter is set, the UE may apply the transform precoding for transmitting the PUSCH (that is, the waveform for the PUSCH is based on the DFT-S-OFDM). As an example, when the msg3-transformPrecoder parameter is not set, the UE may not apply the transform precoding to the transmission of the PUSCH (that is, the waveform for the PUSCH is based on the CP-OFDM).

Method 1.2

Hereinafter, a method for setting UL waveform values to be applied to DCI formats 0_0, 0_1, and 0_2, respectively in the dynamic waveform switching will be specifically described.

According to an embodiment, when receiving (monitoring) DCI format 0_2 or DCI format 0_0 in which the N-bit indication field (e.g., N = 1) is absent, the UE may operate according to a setting/indication value (e.g., a waveform related setting value or a transform Precoding/transformPrecoder related setting value) based on parameters used for an initial access (e.g., SIB, parameters, "msg3-transformPrecoder", and "msgA-TransformPrecoder"). As a specific example, a waveform (whether to apply the transform precoding) for the PUSCH transmission may be determined based on the msg3-transformPrecoder parameter or the msgA-TransformPrecoder parameter.

According to an embodiment, to DCI format 0_2 or DCI format 0_1 in which the N-bit indication field (e.g., N = 1) is present, a waveform value set/indicated based on the indication field (e.g., a value representing enable/disable of the transform precoding) may be applied.

According to an embodiment, in the case of DCI format 0_2 or DCI format 0_1 in which the N-bit indication field (e.g., N = 1) is present, a waveform value corresponding to the indication field may be indicated/determined by a fixed value. In other words, a waveform value which may be indicated through the indication field may be predefined. As an example, when a 1-bit explicit field with N = 1 is introduced, a bit value of the indication field may be defined as follows.

"(transformPrecoder) enabled" (i.e., DFT-s-OFDM) may be defined to be mapped to a value of state 0 (or 1) of the bit field.

"(transformPrecoder) disabled" (i.e., CP-OFDM) may be defined to be mapped to a value of state 1 (or 0) of the bit field.

According to an embodiment, the waveform corresponding to the indication field may be configured/indicated through higher layer signaling or the like by the base station. Specifically, a value set by parameters (e.g., SIB, PUSCH-Config, RRC parameter) used for the existing waveform configuration by the base station may be defined to be mapped to state 0 (or 1) of the indication field. A remaining value may be defined to be mapped to state 1 (or 0) of the indication field. As a specific example, it may be assumed that transform precoding is configured to be disabled based on the higher layer signaling. In this case, the bit value '0' (or '1') of the indication field may indicate the disable of the transform precoding/transform precoder, and the bit value '1' (or '0') of the indicator field may indicate the enable of the transform precoding/transform precoder.

According to an embodiment, the base station may set/indicate a waveform value corresponding to state 0 (or state 1) of the indication field based on higher layer signaling (e.g., additional RRC parameter).

According to an embodiment, a value set/indicated based on the indication field may be applied to DCI format 0_2 or DCI format 0_1 in which the N-bit indication field (e.g., N = 1) is present. In this case, a waveform to be applied according to a situation may be configured/defined in DCI format 0_2 or DCI format 0_0 in which the N-bit indication field (e.g., N = 1) is not present. Hereinafter, this will be specifically described.

As an example, it may be assumed that i) the waveform corresponding to the indication field is indicated/determined based on a fixed value (e.g. enabled (or disabled)) or ii) a waveform corresponding state 0 or 1 of the indication field is configured via the additional RRC parameter (disregarding the RRC parameter used for the existing waveform configuration).

In this case, with respect to DCI format 0_2 or DCI format 0_0 in which the N-bit indication field (e.g., N = 1) is not present, the UE may operate based on the waveform corresponding to the value of state 0 (or 1) of the indication field. Alternatively, the UE may not apply the waveform corresponding to the state 0 (or 1) value of the indication field configured/indicated through the DCI, but may apply the waveform indicated by the RRC parameter used for the existing waveform configuration.

As an example, with respect to DCI format 0_2 or DCI format 0_1 in which the N-bit indication field (e.g., N = 1) is present, it may be assumed that state 0 (or 1) of the indication field is mapped to a value set by the existing RRC parameter. Specifically, state 0 (or 1) of the indication field may be mapped to the value (enabled or disabled) set by the RRC parameter (e.g. "transformPrecoder") used for the existing waveform configuration, and state 1 (or 0) of the indication field may be mapped to a remaining value (disabled or enabled). In this case, when the UE receives DCI format 0_2 or DCI format 0_0 in which the N-bit indication field (e.g., N = 1) is not present, the UE may operate as follows.

The UE may operate according to the state 0 (or 1) value of the indication field described above. Alternatively, the UE may not follow the state 0/1 of the indication field, but may follow the setting of the existing RRC parameter.

As a result, when the base station sets/indicates the additional RRC parameter for configuring the indication field to the UE, the UE may determine that the dynamic waveform switching is enabled, and may interpret/decode the DCI.

Method 1.3

Hereinafter, a method for configuring an indication field for the dynamic waveform switching for DCI format 0_1 and DCI format 0_2 will be specifically described.

A method for the dynamic waveform switching for DCI format 0_1, and DCI format 0_2 in which the N-bit indication field (e.g., N = 1) is present in introducing an indication field configuration is proposed.

According to an embodiment, in the case of DCI format 0_1, and DCI format 0_2 in which the N-bit indication field (e.g., N = 1) is present, one indication field setting method and a method for applying/using the setting value may be defined for all DCI formats (i.e., DCI format 0_1 and DCI format 0_2). That is, for each of all DCI formats in which the indication field is present, the UE may interpret the value of the indication field to be the same and apply the interpreted value in the same scheme. In respective indication fields of all DCI formats, whether to apply a configuration/waveform/transform precoding indicated based on the value of the same indication field may be the same. As a specific example, the value '0' (or '1') of the indication field of each of DCI format 0_1 and DCI format 0_2 may indicate enable (or disable) of the transform precoding/transform precoder.

That is, a value of an indication field of DCI format 0_1 and a value of an indicator field of DCI form 0_2 may be equally defined as a promised fixed value (e.g., 'enabled (or disabled)').

As another example, the state 0 (or 1) value of the indication field may also be defined to follow a value defined by an existing RRC parameter. Alternatively, the value of the indication field may also be set through an additional RRC parameter.

According to an embodiment, the indication field value in DCI format 0_1 and the indication field value of DCI format 0_2 may also be set independently of each other. In this case, when the base station does not provide the indication field setting value, the following UE operations may be defined.

As an example, it may be assumed that the base station defines a setting for the indication field via the additional RRC parameter, but a setting value for DCI format 0_1 is given, while no separate setting value for DCI format 0_2 is provided.

In this case, the UE may operate by interpreting that the indication field setting value for DCI format 0_2 is the same as the indication field setting value for DCI form 0_1.

Alternatively, the UE may operate by assuming that the state 0 (or state 1) value of the indication field for DCI format 0_2 is set based on the existing RRC parameter value.

As another example, it may be assumed that the base station defines the setting for the indication field via the additional RRC parameter, but a separate setting value for DCI format 0_1 and/or DCI format 0_2 is not provided.

The UE may operate by assuming that the state 0 (or state 1) value of the indication field for DCI format 0_1 and/or DCI format 0_2 is set based on the existing RRC parameter value.

The embodiments based on Methods 1.1 to 1.3 proposed above may be configured/applied to other UL signals/channels such as MSG3 PUSCH, MSGA Preamble/PUSCH, and/or PUSCH/PUCCH. Further, it is obvious that since the examples of the proposed scheme described above may also be included as one of implementing methods of the present disclosure, the examples may be regarded as a kind of proposed schemes. Further, the proposed schemes described above may be independently implemented, but implemented in combination (or merge) of some of the proposed schemes. A rule is defined so that the base station notifies, to the UE, information regarding whether to apply the proposed methods (or information on rules of the proposed methods) through a signal (e.g., a physical layer signal or a higher layer signal) defined in advance. A higher layer may include, for example, one or more of functional layers such as MAC, RLC, RRC, and SDAP.

The methods, embodiments or descriptions for implementing the method proposed in the present disclosure may be applied separately, or one or more methods (or embodiments or descriptions) may be applied in combination.

As an example, the operations based on at least one of Methods 1.1 to 1.3 may be based on Table 5 below.

[Table 5]

| 6.1.3 UE procedure for applying transform precoding on PUSCH |
|---|
| For a PUSCH scheduled by RAR UL grant, or for a PUSCH scheduled by fallbackRAR UL grant, or for a PUSCH scheduled by DCI format 0_0 with CRC scrambled by TC-RNTI, the UE shall consider the transform precoding either 'enabled' or 'disabled' according to the higher layer configured parameter *msg3-transformPrecoder*. |
| For a MsgA PUSCH, the UE shall consider the transform precoding either 'enabled' or 'disabled' according to the higher layer configured parameter *msgA-TransformPrecoder*. If higher layer parameter *msgA-TransformPrecoder* is not configured, the UE shall consider the transform precoding either 'enabled' or 'disabled' according to the higher layer configured parameter *msg3-transformPrecoder*. |
| For PUSCH transmission scheduled by a PDCCH with CRC scrambled by CS-RNTI with NDI=1, C-RNTI, or MCS-C-RNTI or SP-CSI-RNTI: |
| - If the DCI with the scheduling grant was received with DCI format 0_0, the UE shall, for this PUSCH transmission, consider the transform precoding either enabled or disabled according to the higher layer configured parameter *msg3-transformPrecoder*. |
| - If the DCI with the scheduling grant was not received with DCI format 0_0 |
| - If the DCI with the scheduling grant was received with DCI format 0_1 or 0_2 with CRC scrambled by C-RNTI, MCS-RNTI, or CS-RNTI with NDI=1 and if the UE is configured with a higher layer parameter [*dynamic TransformPrecoderIndicationDCI-0-1*] in *pusch-Config* for DCI format 0_1 or [*dynamicTransformPrecoderIndicationDCI-0-2*] in *pusch-Config* for DCI format 0_2 and the higher layer parameter is set to 'enabled', |
| - the UE shall, for this PUSCH transmission, consider the transform precoding either enabled or disabled according to the Transform precoder indicator field in the DCI with the scheduling grant. |
| - For *pusch-TimeDomainAllocationListForMultiPUSCH* in *pusch-Config,* the UE shall, for all PUSCH transmissions, consider the transform precoding either enabled or disabled according to Transform precoder indicator field in the DCI format 0_1 with the scheduling grant. |
| - If *resourceAllocation* in *pusch-Config* for DCI format 0_1 or *resourceAllocationDCI-0-2* in *pusch-Config* for DCI format 0_2 is set to *resourceAllocationType0,* or if the resource allocation is set to resource allocation type 0 according to the DCI configuration as described in clauses 7.3.1.1.2 and 7.3.1.1.3 of [6, TS 38.212], or if *dmrs-Type* in *DMRS-UplinkConfig* is set to 'type 2' for this PUSCH transmission, the UE does not expect that the Transform precoder indicator field in the DCI with the scheduling grant indicates that transform precoding is enabled. |
| - If the UE is configured with the higher layer parameter *enhanced-dmrs-Type-r18* in *DMRS-UplinkConfig*, and if the scheduling grant indicates that transform precoding is enabled for the scheduled PUSCH transmission, the UE ignores the higher layer parameters *enhanced-dmrs-Type-r18* in *DMRS-UplinkConfig*, if configured, for the DM-RS transmission of the scheduled PUSCH transmission. |
| - Otherwise, |
| - If the UE is configured with the higher layer parameter *transformPrecoder* in *pusch-Config,* the UE shall, for this PUSCH transmission, consider the transform precoding either enabled or disabled according to this parameter. |
| - If the UE is not configured with the higher layer parameter *transformPrecoder* in *pusch-Config,* the UE shall, for this PUSCH transmission, consider the transform precoding either enabled or disabled according to the higher layer configured parameter *msg3-transformPrecoder*. |
| For PUSCH transmission with a configured grant |
| - If the UE is configured with the higher layer parameter *transformPrecoder* in *configuredGrantConfig*, the UE shall, for this PUSCH transmission, consider the transform precoding either enabled or disabled according to this parameter. |

(continued)

| |
|---|
| - If the UE is not configured with the higher layer parameter transformPrecoder in configuredGrantConfig, the UE shall, for this PUSCH transmission, consider the transform precoding either enabled or disabled according to the higher layer configured parameter msg3-transformPrecoder. |

As an example, the DCI format including the N-bit indication field based on at least one of Methods 1.1 to 1.3 may be based on Table 6 below.

[Table 6]

| |
|---|
| 7.3.1.1.2 Format 0_1<br>DCI format 0_1 is used for the scheduling of one or multiple PUSCH in one cell, or indicating CG downlink feedback information (CG-DFI) to a UE.<br>The following information is transmitted by means of the DCI format 0_1 with CRC scrambled by C-RNTI or CS-RNTI or SP-CSI-RNTI or MCS-C-RNTI:<br>- Transform precoder indicator - 0 or 1 bit<br>- 1 bit if the higher layer parameter *dynamicTransformPrecoderIndicationDCI-0-1* is configured to 'enabled' and if the UE is configured to monitor DCI format 0_1 with CRC scrambled by C-RNTI or CS-RNTI or MCS-C-RNTI, where the bit value of 0 indicates that transform precoder is enabled and the bit value of 1 indicates that transform precoder is disabled. For a DCI format 0_1 with CRC scrambled by CS-RNTI and the value indicated by new data indicator field is 0, or for a DCI format 0_1 with CRC scrambled by SP-CSI-RNTI, the bit is reserved.<br>- 0 bit otherwise.<br>7.3.1.1.3 Format 0 2<br>DCI format 0_2 is used for the scheduling of PUSCH in one cell.<br>The following information is transmitted by means of the DCI format 0_2 with CRC scrambled by C-RNTI or CS-RNTI or SP-CSI-RNTI or MCS-C-RNTI:<br>- Transform precoder indicator - 0 or 1 bit<br>- 1 bit if the higher layer parameter *dynamicTransformPrecoderIndicationDCI-0-2* is configured to 'enabled' and if the UE is configured to monitor DCI format 0_2 with CRC scrambled by C-RNTI or CS-RNTI or MCS-C-RNTI, where the bit value of 0 indicates that transform precoder is enabled and the bit value of 1 indicates that transform precoder is disabled. For a DCI format 0_2 with CRC scrambled by CS-RNTI and the value indicated by new data indicator field is 0, or for a DCI format 0_2 with CRC scrambled by SP-CSI-RNTI, the bit is reserved.<br>- 0 bit otherwise. |

The transform precoder indicator field in Table 6 may mean an (N-bit) indication field based on at least one of Methods 1.1 to 1.3.

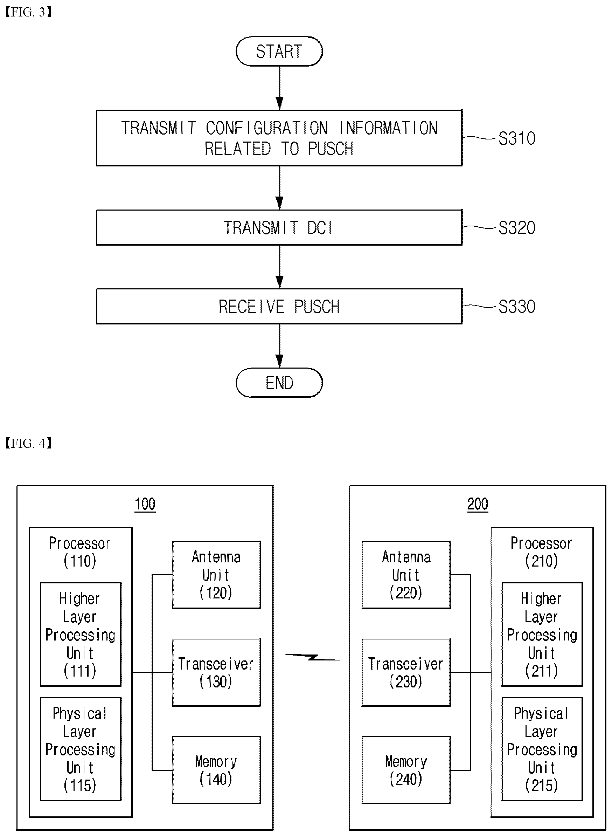

In terms of implementation, the operations (e.g., operations based on at least one of Methods 1.1 to 1.3) of the BS/UE according to the above-described embodiments may be processed by devices (e.g., 100 and 200) in FIG. 4 to be described below.

Further, the operations (e.g., operations based on at least one of Methods 1.1 to 1.3) of the base station/UE according to the above-described embodiment may be stored in memories (e.g., 140 and 240 in FIG. 4) in the form of an instruction/program (e.g., instruction or executable code) for driving at least one processor (e.g., 110 and 210 in FIG. 4).

Hereinafter, the embodiments described above will be described in detail with reference to FIGS. 2 and 3 in terms of the operations of the UE and the base station. Methods to be described below are just distinguished for convenience and it is needless to say that some components of any one method may be substituted with some components of another method or may be applied in combination with each other.

FIG. 2 is a flowchart for describing a method performed by a user equipment (UE) according to an embodiment of the present disclosure.

Referring to FIG. 2, the method performed by the UE according to an embodiment of the present disclosure includes a step S210 of receiving configuration information related to a PUSCH, a step S220 of receiving DCI, and a step S230 of transmitting the PUSCH.

In S210, the UE receives, from the base station, configuration information related to a Physical Uplink Channel (PUSCH).

The configuration information may be based on PUSCH-config. The configuration information may include information based on Methods 1.1 to 1.3 described above. As an example, the configuration information may include a parameter related to a dynamic indication of transform precoding (e.g., dynamicTransformPrecoderIndication in Table 5).

In S220, the UE receives, from the base station, Downlink Control Information (DCI) for scheduling the PUSCH.

The DCI format related to the DCI may be DCI format 0_0, DCI format 0_1, or DCI format 0_2.

Whether transform precoding for the PUSCH is enabled may be determined based on at least one of Methods 1.1 to 1.3 described above.

Specifically, based on the DCI format related to the DCI and/or the configuration information, whether the transform precoding for the PUSCH is enabled may be determined based on the DCI or a higher layer parameter.

As an example, based on the DCI format being the DCI format 0_1 or the DCI format 0_2, and a parameter related to a dynamic indication of the transform precoding being configured based on the configuration information: the DCI may include a transform precoder indicator field. The transform precoding may be enabled or disabled based on the transform precoder indicator field.

As an example, based on the DCI format being the DCI format 0_1 or the DCI format 0_2, and the parameter related to the dynamic indication not being configured based on the configuration information: the transform precoding may be enabled or disabled based on the higher layer parameter.

The higher layer parameter is a transformPrecoder parameter within the configuration information or a random access parameter .

Based on the transformPrecoder parameter not being configured: the transform precoding may be enabled or disabled based on the random access parameter.

The random access parameter is an msg3-transformPrecoder parameter.

As an example, based on the DCI format being a DCI format 0_0, the transform precoding may be enabled or disabled based on the higher layer parameter (e.g., msg3-transformPrecoder parameter).

According to an embodiment, based on a txConfig parameter representing a transmission scheme related to the PUSCH not being configured, the DCI format may be the DCI format 0_0. In this case, the PUSCH may be transmitted based on a single antenna port. For example, the configuration information may not include the txConfig parameter.

According to an embodiment, based on the txConfig parameter representing the transmission scheme related to the PUSCH being configured, the DCI format may be the DCI format 0_1 or the DCI format 0_2.

The transmission scheme may be codebook based transmission or non-codebook based transmission. In this case, the PUSCH may be transmitted based on the same antenna ports as one or more SRS ports indicated based on the DCI format. The one or more SRS ports may be based on one or more SRS resources indicated based on an SRS resource indicator field of the DCI format.

According to an embodiment, a waveform related to the transmission of the PUSCH may be based on i) Cyclic Prefix-Orthogonal Frequency Division Multiplexing (CP-OFDM) or ii) Discrete Fourier Transform-Spreading-OFDM (DFT-S-OFDM). the transform precoding may be related to the DFT-S-OFDM.

According to an embodiment, physical Uplink Control Information (UCI) may be multiplexed in the PUSCH in which the transform precoding is enabled based on the transform precoder indicator field. In this case, the UCI may be related to a PUCCH format to which the transform precoding is applied.

Specifically, a Physical Uplink Control CHannel (PUCCH) format related to the UCI may be PUCCH format 3 or PUCCH format 4 (see Table 1). The transform precoding may be applied to the PUCCH format 3 or the PUCCH format 4.

In S230, the UE transmits the PUSCH to the base station.

The method may further include a random access configuration receiving step. In the random access configuration receiving step, the UE receives a Random Access Channel (RACH) configuration from the base station. The RACH configuration may be based on RACH-ConfigCommon in Table 2. The higher layer parameter may include an msg3-transformPrecoder parameter within the RACH configuration.

The method may further include a PUCCH transmitting step. In the PUCCH transmitting step, the UE transmits a Physical Uplink Control Channel (PUCCH) to the base station. The PUSCH and the PUCCH may be transmitted simultaneously.

In this case, whether a waveform related to the PUSCH (whether transform precoding is applied) may be the same as or different from a waveform related to the PUCCH (whether the transform precoding is applied). That is, the simultaneous transmission may be performed based on the same waveform or different waveforms.

As an example, the waveform related to the PUSCH (e.g., CP-OFDM or DFT-S-OFDM) may be the same as the waveform related to the PUCCH (e.g., CP-OFDM or DFT-S-OFDM). As an example, the waveform related to the PUSCH (e.g., CP-OFDM or DFT-S-OFDM) may be different from the waveform related to the PUCCH (e.g., CP-OFDM or DFT-S-OFDM).

The operations based on S210 to S230, the random access configuration receiving step, and the PUCCH transmitting step described above may be implemented by the devices in FIG. 4. For example, a UE 200 may control one or more transceivers 230 and/or one or more memories 240 to perform the operations based on S210 to S230, the random access configuration receiving step, and the PUCCH transmitting step.

Hereinafter, the embodiments described below will be specifically described in terms of the operation of the base station.

S310 to S330, a random access configuration transmitting step, and a PUCCH receiving step described below correspond to S210 to S230, the random access configuration receiving step, and the PUCCH transmitting step described in FIG. 2. By considering the correspondence relationship, redundant descriptions are omitted. That is, a specific description of a base station operation described below may be replaced with the description/example of FIG. 2 corresponding to the operation. As an example, the description/embodiments of S210 to S230 in FIG. 2 may be additionally applied to base station operations of S310 to S330 described below. As an example, the description/embodiments of the random access configuration receiving step and the PUCCH transmitting step may be additionally applied to the base station operations of the random access configuration transmitting step and the PUCCH receiving step described below.

FIG. 3 is a flowchart for describing a method performed by a base station according to another embodiment of the present disclosure.

Referring to FIG. 3, the method performed by the base station according to an embodiment of the present disclosure includes a step S310 of transmitting configuration information related to a PUSCH, a step S320 of transmitting DCI, and a step S330 of receiving the PUSCH.

In S310, the base station transmits, to the UE, configuration information related to a Physical Uplink Channel (PUSCH).

In S320, the base station transmits, to the UE, Downlink Control Information (DCI) for scheduling the PUSCH.

In S330, the base station receives the PUSCH from the UE.

The method may further include a random access configuration transmitting step. In the random access configuration transmitting step, the base station transmits a Random Access CHannel (RACH) configuration to the UE.

The method may further include a PUCCH receiving step. In the PUCCH receiving step, the base station receives a Physical Uplink Control Channel (PUCCH) from the UE. The PUSCH and the PUCCH may be received simultaneously.

The operations based on 310 to S330, the random access configuration transmitting step, and the PUCCH receiving step described above may be implemented by the devices in FIG. 4. For example, a base station 100 may control one or more transceivers 130 and/or one or more memories 140 to perform the operations based on S310 to S330, the random access configuration transmitting step, and the PUCCH receiving step.

A device to which an embodiment of the present disclosure is applicable (a device implementing the method/operation according to an embodiment of the present disclosure) is described below with reference to FIG. 4.

FIG. 4 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

**Claims**

1. A method performed by a user equipment in a wireless communication system, the method comprising:

    receiving configuration information related to a Physical Uplink Shared Channel (PUSCH);
    receiving Downlink Control Information (DCI) for scheduling of the PUSCH; and
    transmitting the PUSCH,
    wherein, based on a DCI format related to the DCI and/or the configuration information: whether a transform precoding for the PUSCH is enabled is determined based on the DCI or a higher layer parameter,
    wherein, based on the DCI format being a DCI format 0_1 or a DCI format 0_2 and a parameter related to a dynamic indication of the transform precoding being configured based on the configuration information:

        the DCI includes a transform precoder indicator field, and
        the transform precoding is enabled or disabled based on the transform precoder indicator field.

2. The method of claim 1, wherein based on the DCI format being the DCI format 0_1 or the DCI format 0_2, and the parameter related to the dynamic indication not being configured based on the configuration information:
    the transform precoding is enabled or disabled based on the higher layer parameter.

3. The method of claim 2, wherein the higher layer parameter is a transformPrecoder parameter within the configuration information or a random access parameter.

4. The method of claim 3, wherein based on the transformPrecoder parameter not being configured: the transform precoding is enabled or disabled based on the random access parameter.

5. The method of claim 4, wherein the random access parameter is an msg3-transformPrecoder parameter.

6. The method of claim 1, wherein based on the DCI format being a DCI format 0_0, the transform precoding is enabled or disabled based on the higher layer parameter.

7. The method of claim 6, wherein based on a txConfig parameter representing a transmission scheme related to the PUSCH not being configured, the DCI format is the DCI format 0_0.

8. The method of claim 7, wherein the PUSCH is transmitted based on a single antenna port.

9. The method of claim 1, wherein based on the txConfig parameter representing a transmission scheme related to the PUSCH being configured, the DCI format is the DCI format 0_1 or the DCI format 0_2.

10. The method of claim 9, wherein the transmission scheme is codebook based transmission or non-codebook based transmission.

11. The method of claim 10, wherein the PUSCH is transmitted based on same antenna ports as one or more SRS ports indicated based on the DCI format.

12. The method of claim 11, wherein the one or more SRS ports are based on one or more SRS resources indicated based on an SRS resource indicator field of the DCI format.

13. The method of claim 1, wherein a waveform related to the transmission of the PUSCH is based on i) Cyclic Prefix-Orthogonal Frequency Division Multiplexing (CP-OFDM) or ii) Discrete Fourier Transform-Spreading-OFDM (DFT-S-OFDM).

14. The method of claim 13, wherein the transform precoding is related to the DFT-S-OFDM.

15. The method of claim 1, wherein physical Uplink Control Information (UCI) is multiplexed in the PUSCH in which the transform precoding is enabled based on the transform precoder indicator field,

   wherein a Physical Uplink Control Channel (PUCCH) format related to the UCI is PUCCH format 3 or PUCCH format 4, and
   wherein the transform precoding is applied to the PUCCH format 3 or the PUCCH format 4.

16. The method of claim 1, further comprising:

   transmitting a Physical Uplink Control Channel (PUCCH),
   wherein the PUSCH and the PUCCH are transmitted simultaneously.

17. The method of claim 16, wherein a waveform related to the PUSCH is the same as a waveform related to the PUCCH.

18. The method of claim 16, wherein the waveform related to the PUSCH is different from the waveform related to the PUCCH.

19. A user equipment operating in a wireless communication system, the user equipment comprising:

   one or more transceivers;
   one or more processors; and
   one or more memories connected to the one or more processors and storing instructions,
   wherein the instructions configure the one or more processors to perform all steps of a method according to any one of claims 1 to 18 based on being executed by the one or more processors.

20. A device comprising:

   one or more memories; and
   one or more processors operably connected to the one or more memories,
   wherein the one or more memories store instructions that configure the one or more processors to perform all steps of a method according to any one of claims 1 to 18 based on being executed by the one or more processors.

21. One or more non-transitory computer readable mediums storing instructions,

wherein the instructions executable by one or more processors configure the one or more processors to perform all steps of a method according to any one of claims 1 to 18.

22. A method performed by a base station in a wireless communication system, the method comprising:

transmitting configuration information related to a Physical Uplink Shared Channel (PUSCH);
transmitting Downlink Control Information (DCI) for scheduling of the PUSCH; and
receiving the PUSCH,
wherein, based on a DCI format related to the DCI and/or the configuration information: whether a transform precoding for the PUSCH is enabled is determined based on the DCI or a higher layer parameter,
wherein, based on the DCI format being a DCI format 0_1 or a DCI format 0_2 and a parameter related to a dynamic indication of the transform precoding being configured based on the configuration information:

the DCI includes a transform precoder indicator field, and
the transform precoding is enabled or disabled based on the transform precoder indicator field.

23. A base station operating in a wireless communication system, the base station comprising:

one or more transceivers;
one or more processors; and
one or more memories connected to the one or more processors and storing instructions,
wherein the instructions configure the one or more processors to perform all steps of a method according to claim 22 based on being executed by the one or more processors.

【FIG. 1】

UE                                                        BASE STATION

S110

UPLINK SCHEDULING

S120

DCI FOR UPLINK SCHEDULING (PDCCH)

S130

UPLINK DATA (PUSCH)

【FIG. 2】

START

RECEIVE CONFIGURATION INFORMATION
RELATED TO PUSCH                          S210

RECEIVE DCI                               S220

TRANSMIT PUSCH                            S230

END

【FIG. 3】

```
                          ┌─────────────┐
                          │    START    │
                          └─────────────┘
                                 │
                                 ▼
        ┌────────────────────────────────────────────┐
        │  TRANSMIT CONFIGURATION INFORMATION          │──── S310
        │        RELATED TO PUSCH                      │
        └────────────────────────────────────────────┘
                                 │
                                 ▼
        ┌────────────────────────────────────────────┐
        │              TRANSMIT DCI                    │──── S320
        └────────────────────────────────────────────┘
                                 │
                                 ▼
        ┌────────────────────────────────────────────┐
        │             RECEIVE PUSCH                    │──── S330
        └────────────────────────────────────────────┘
                                 │
                                 ▼
                          ┌─────────────┐
                          │     END     │
                          └─────────────┘
```

【FIG. 4】

## INTERNATIONAL SEARCH REPORT

| International application No. |
| --- |
| **PCT/KR2024/002071** |

**A. CLASSIFICATION OF SUBJECT MATTER**

**H04L 27/26**(2006.01)i; **H04L 5/00**(2006.01)i; **H04W 72/232**(2023.01)i

According to International Patent Classification (IPC) or to both national classification and IPC

**B. FIELDS SEARCHED**

Minimum documentation searched (classification system followed by classification symbols)

H04L 27/26(2006.01); H04L 5/00(2006.01); H04W 52/14(2009.01); H04W 52/24(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 물리 상향링크 공유 채널(Physical Uplink Channel, PUSCH), 하향링크 제어 정보 (Downlink Control Information, DCI), DCI 포맷(DCI format), 변환 프리코딩(transform precoding), 상위 계층 파라미터 (higher layer parameter), 동적 지시(dynamic indication), 변환 프리코더 지시자(transform precoder indicator), 인에이블 (enable), 디스에이블(disable), msg3-transformPrecoder, txConfig, SRS port

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2021-226861 A1 (QUALCOMM INCORPORATED et al.) 18 November 2021 (2021-11-18)<br>See paragraphs [0005] and [0071]; and claims 1 and 4. | 1-23 |
| Y | ZTE. Discussion on dynamic waveform switching. R1-2211049, 3GPP TSG RAN WG1 Meeting #111. pp. 1-8, 07 November 2022.<br>See sections 2.2.1-2.2.2. | 1-23 |
| Y | WO 2022-199565 A1 (TELEFONAKTIEBOLAGET LM ERICSSON (PUBL) et al.) 29 September 2022 (2022-09-29)<br>See pages 16, 19-20 and 31. | 7-12 |
| Y | WO 2022-213266 A1 (APPLE INC.) 13 October 2022 (2022-10-13)<br>See claims 2 and 23. | 15-18 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 June 2024** | **05 June 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/002071** |

## C.    DOCUMENTS CONSIDERED TO BE RELEVANT

| Category* | Citation of document, with indication, where appropriate, of the relevant passages | Relevant to claim No. |
| --- | --- | --- |
| A | KR 10-2020-0116488 A (SHARP KABUSHIKI KAISHA et al.) 12 October 2020 (2020-10-12)<br>See claims 1-6. | 1-23 |

Form PCT/ISA/210 (second sheet) (July 2022)

International application No.

**PCT/KR2024/002071**

| Patent document cited in search report | | | Publication date (day/month/year) | Patent family member(s) | | | Publication date (day/month/year) |
|---|---|---|---|---|---|---|---|
| WO | 2021-226861 | A1 | 18 November 2021 | EP | 4151020 | A1 | 22 March 2023 |
| | | | | EP | 4151020 | A4 | 24 January 2024 |
| | | | | US | 2023-0127731 | A1 | 27 April 2023 |
| WO | 2022-199565 | A1 | 29 September 2022 | EP | 4316028 | A1 | 07 February 2024 |
| WO | 2022-213266 | A1 | 13 October 2022 | EP | 4302443 | A1 | 10 January 2024 |
| | | | | US | 2024-0048319 | A1 | 08 February 2024 |
| KR | 10-2020-0116488 | A | 12 October 2020 | EP | 3749036 | A1 | 09 December 2020 |
| | | | | JP | 2019-134354 | A | 08 August 2019 |
| | | | | US | 11259319 | B2 | 22 February 2022 |
| | | | | US | 2021-0045145 | A1 | 11 February 2021 |
| | | | | WO | 2019-151051 | A1 | 08 August 2019 |

Form PCT/ISA/210 (patent family annex) (July 2022)